# EUROPÄISCHE PATENTANMELDUNG

(11) **EP 0 575 744 A1**
(43) Veröffentlichungstag der Anmeldung: **29.12.1993**
(21) Anmeldenummer: 93108001.4
(22) Anmeldetag: 17.05.1993
(51) Int. Cl.: C09B 69/00

(54) **Silangruppenhaltige Farbstoffe, Verfahren zu deren Hertstellung und deren Verwendung**

(30) Priorität: 22.05.1992 DE 4217035
(71) Anmelder: HOECHST AKTIENGESELLSCHAFT, D-65926 Frankfurt am Main (DE)
(72) Erfinder: Schrell, Andreas, Dr., W-6230 Frankfurt am Main (DE); Russ, Werner Hubert, Dr., W-6093 Flörsheim am Main (DE); Riehm, Thomas, W-6234 Hattersheim am Main (DE)

(57) **Zusammenfassung**

Es werden Farbstoffe beschrieben, wie beispielsweise Azofarbstoffe und Schwermetallkomplex-Azofarbstoffe, Anthrachinon-, Nickel- und Kupferphthalocyanin- und Formazanfarbstoffe, die einen β-Aminoethylsulfonyl- oder 4-Alkoxy- oder 4-Aryloxy-6-amino-1,3,5-triazin-2-ylamino-Rest enthalten, wobei die Aminogruppe im β-Aminoethylsulfonyl-Rest und die 6-Amino-Gruppe im Triazinrest über ein Brückenglied mit einem vorzugsweise alkoxy- und/oder hydroxygruppenhaltigen Silansubstituenten verbunden ist. Die Farbstoffe eignen sich zum Färben von Fasermaterialien, die Hydroxy-, Amino-, Carbonamid-, Carbonsäureester-, Carboxy- und/oder Thiolgruppen enthalten, wie insbesondere Cellulosefasermaterialien, wobei übliche Färbeweisen angewandt werden können, jedoch im wesentlichen auf die Verwendung von üblichen Elektrolytsalzen verzichtet werden kann und die Verwendung von alkalisch wirkenden Mitteln bei der Fixierung der Farbstoffe auf der Faser nicht erforderlich ist. Die Farbstoffe werden üblicherweise in wäßriger Lösung auf das Fasermaterial aufgebracht und einer Hitzebehandlung von oberhalb 95°C zur Fixierung des Farbstoffes ausgesetzt.

## Beschreibung

Aus den U.S. Patentschriften Nrs. 2 925 313, 2 934 495 und 4 403 099, der britischen Patentanmeldungs-Veröffentlichung Nr. 2 018 798, der europäischen Patentanmeldungs-Veröffentlichung Nr. 0 123 577A und aus J. Soc. Dyers and Col. 85, 401-404 (1969), sind Farbstoffe bekannt, die einen Silanrest enthalten.

Anders als bei wasserunlöslichen Farbstoffen werden bei wasserlöslichen Textilfarbstoffen beim Färben von Textilien zur Erhöhung der Substantivität Elektrolytsalze und zur Fixierung von Reaktivfarbstoffen Alkalien benötigt, die nach Abschluß des Färbeprozesses in das Abwasser gelangen, wobei die Elektrolytsalze und die aus der Neutralisation von überschüssigem Alkali entstandenen Salze in der Regel nicht aus dem Abwasser entfernt werden können. Die damit verbundene Umweltbelastung zu reduzieren oder gar zu beheben, war Anlaß, nach neuen Farbstoffen zu suchen, die es erlauben, die Mengen dieser notwendigen Zusätze drastisch zu verringern oder daß auf sie gänzlich verzichtet werden kann, dies auch unter dem Aspekt, daß bei der Anwendung von faserreaktiven Farbstoffen bei dem Fixiervorgang des faserreaktiven Farbstoffes in der wäßrigen, oft stark alkalischen Färbeflotte Hydrolysereaktionen des faserreaktiven Farbstoffes als Nebenreaktion ablaufen können, weswegen die Fixierung auf dem Fasermaterial nicht vollständig ist. Aus diesem Grunde müssen im Anschluß an den Färbeprozeß teilweise umfangreiche und zeitaufwendige Wasch- und Spülprozesse ausgeführt werden, wie das mehrfache Spülen mit kaltem und heißem Wasser und einer dazwischen liegenden Neutralisationsbehandlung zur Entfernung überschüssigem Alkalis auf dem gefärbten Material und desweiteren beispielsweise eine Kochwäsche mit einem nicht-ionogenen Waschmittel, um die guten Echtheiten der Färbung zu gewährleisten.

Es wurden nunmehr die neuen, nachstehend angegebenen Farbstoffe der allgemeinen Formel (1) gefunden, mit welchen in überraschender Weise Färbungen in gleichmäßiger Farbnuance und hoher Farbstärke und mit guten Fabrikations- und Gebrauchsechtheiten erhalten werden, selbst wenn man das Färbeverfahren (worunter auch Druckverfahren verstanden werden) unter Anwendung von elektrolytarmen und alkaliarmen oder gar elektrolytfreien und alkalifreien Färbeflotten durchführt, weswegen auch die aufwendige Nachbehandlung der Färbungen durch Spül- und Kochprozesse entfallen kann.

Die neuen, erfindungsgemäßen Farbstoffe entsprechen der allgemeinen Formel (1)

F-(Z)ₛ (1)

in welcher bedeuten:
- F: ist der Rest eines sulfo- und/oder carboxygruppenhaltigen Farbstoffes, wie eines Monoazo-, Disazo- oder Polyazofarbstoffes oder eines davon abgeleiteten Schwermetallkomplex-Azofarbstoffes, wie 1:1-Kupfer-, 1:2-Chrom- und 1:2-Kobaltkomplex-Azofarbstoffes, oder eines Anthrachinon-, Phthalocyanin-, wie insbesondere Nickel- und Kupfer-phthalocyanin-, eines Formazan-, wie insbesondere Kupferformazan-, eines Azomethin-, Dioxazin-, Phenoxazin-, Phenazin-, Stilben-, Xanthen-, Thioxanthen- oder Napthochinon-Farbstoffes;
- s: ist die Zahl 1, 2 oder 3, bevorzugt 1 oder 2;
- Z: ist eine Gruppe der allgemeinen Formel (2A) oder (2B)

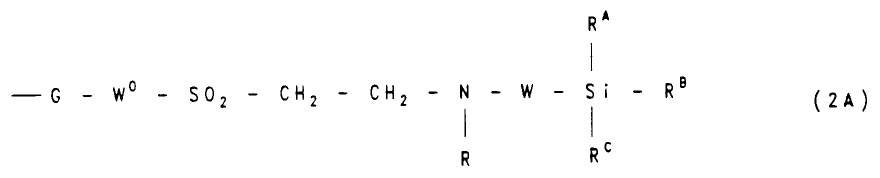

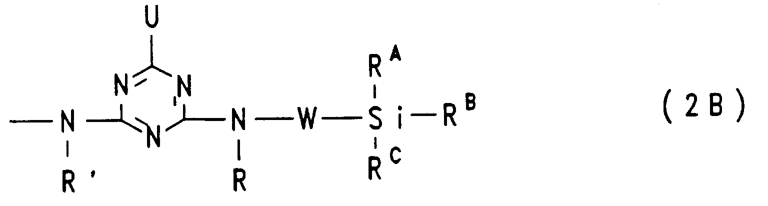

in welchen bedeuten:
- R: ist Wasserstoff oder Alkyl von 1 bis 4 C-Atomen, das durch Phenyl, Sulfophenyl, Sulfo, Carboxy, Sulfato oder Hydroxy substituiert sein kann;
- R': ist Wasserstoff oder Alkyl von 1 bis 4 C-Atomen, das durch Phenyl, Sulfophenyl, Sulfo oder Carboxy substituiert sein kann, und ist vorzugsweise Methyl oder Ethyl und insbesondere Wasserstoff;
- G: ist eine direkte Bindung oder eine Gruppe der Formel -NH-CO-, -CO-NH- , -NH-SO₂- , -SO₂-NH- oder -N(R⁰)- mit R⁰ gleich Wasserstoff oder Alkyl von 1 bis 4 C-Atomen, das durch Hydroxy, Phenyl, Sulfophenyl, Sulfo oder Carboxy substituiert sein kann;
- W^{o}: ist eine direkte Bindung oder eine Gruppe der allgemeinen Formel (3)

-(alk)ₓ-(arylen)_{y}-X-(alkylen)_{z}- (3)

in welcher
- alk: ein Alkylenrest von 1 bis 4 C-Atomen, vorzugsweise von 2 bis 4 C-Atomen, wie insbesondere Ethylen und n-Propylen, oder ein Rest der allgemeinen Formel -alk-O- mit alk der eben genannten Bedeutung ist,
arylen Phenylen ist, das durch 1 oder 2 Substituenten aus der Gruppe Methyl, Ethyl, Methoxy, Ethoxy, Sulfo und Carboxy substituiert sein kann,
alkylen Alkylen von 1 bis 6 C-Atomen, vorzugsweise von 1 bis 4 C-Atomen, insbesondere Methylen, Ethylen oder n-Propylen, ist, das durch 1 oder 2 Substituenten aus der Gruppe Hydroxy, Sulfo, Carboxy und Sulfato substituiert sein kann, oder Alkylen von 4 bis 8 C-Atomen ist, das durch 1 oder 2 Heterogruppen aus der Gruppe der Formeln -O- und -NH- unterbrochen ist,
- x: die Zahl Null oder 1 ist,
- y: die Zahl Null oder 1 ist,
- z: die Zahl Null oder 1 ist, wobei die Summe von (x + z) für die Zahl Null oder 1 steht, und
- X: die Gruppe -O- oder -NH- bedeutet;
- W: ist eine Gruppe der allgemeinen Formel (4) 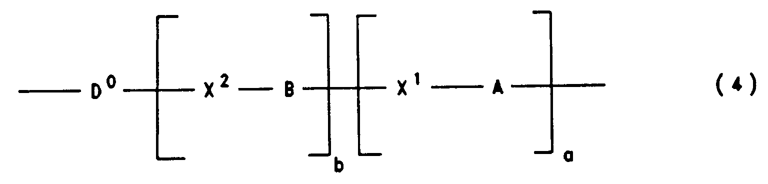 in welcher bedeuten:
- a: ist die Zahl Null oder 1;
- b: ist eine ganze Zahl von Null bis 10, vorzugsweise Null oder 1 bis 5 und insbesondere Null oder 1 bis 3;
- A: ist Alkylen von 1 bis 6 C-Atomen, vorzugsweise von 2 bis 4 C-Atomen, das durch Hydroxy, Methoxy, Ethoxy, Sulfo, Sulfato oder Carboxy substituiert sein kann, oder ist Phenylen, das durch Methoxy, Ethoxy, Methyl, Ethyl, Sulfo und/oder Carboxy substituiert sein kann, oder ist Phenylen-alkylen, Alkylen-phenylen, Alkylen-phenylen-alkylen oder Phenylen-alkylen-phenylen, wobei die Alkylengruppen dieser Reste solche von 1 bis 6 C-Atomen, vorzugsweise von 1 bis 4 C-Atomen, sind und durch Hydroxy, Methoxy, Ethoxy, Sulfo, Sulfato oder Carboxy substituiert sein können, und die Phenylenreste durch Methoxy, Ethoxy, Methyl, Ethyl, Sulfo und/oder Carboxy substituiert sein können;
- X¹: ist eine Gruppe der Formel -S-, -O-, -NH- oder -N(R'')-, in welcher R'' Alkyl von 1 bis 4 C-Atomen, wie Methyl oder Ethyl, ist, und ist vorzugsweise eine Gruppe der Formel -O- oder -NH- ;
- B: ist Cycloalkylen von 5 bis 8 C-Atomen, wie Cyclohexylen und Cyclopentylen, oder Alkylen von 1 bis 6 C-Atomen, vorzugsweise von 1 bis 4 C-Atomen, insbesondere von 2 oder 3 C-Atomen, das durch Hydroxy, Methoxy, Ethoxy, Sulfato, Sulfo oder Carboxy substituiert sein kann, oder ist Phenylen, das durch Methoxy, Ethoxy, Methyl, Ethyl, Sulfo und/oder Carboxy substituiert sein kann, vorzugsweise Alkylen von 2 bis 4 C-Atomen;
- X²: ist eine Gruppe der Formel -S- , -O- , -NH- oder -N(R'')- mit R'' der obengenannten Bedeutung und vorzugsweise -O- oder -NH- ;
- D^{O}: ist Alkylen von 1 bis 6 C-Atomen, vorzugsweise von 2 bis 4 C-Atomen, das durch Hydroxy, Methoxy, Ethoxy, Sulfo, Sulfato oder Carboxy substituiert sein kann, oder ist Phenylen, das durch Methoxy, Ethoxy, Methyl, Ethyl, Sulfo und/oder Carboxy substituiert sein kann, oder ist Phenylen-alkylen, Alkylen-phenylen, Alkylen-phenylen-alkylen oder Phenylen-alkylen-phenylen, wobei die Alkylengruppen dieser Reste solche von 1 bis 6 C-Atomen, vorzugsweise von 1 bis 4 C-Atomen, sind und durch Hydroxy, Methoxy, Ethoxy, Sulfo, Sulfato oder Carboxy substituiert sein können, und die Phenylenreste durch Methoxy, Ethoxy, Methyl, Ethyl, Sulfo und/oder Carboxy substituiert sein können, oder D^{O} kann eine direkte Bindung sein, falls (a + b) nicht Null ist, und ist vorzugsweise Alkylen von 2 bis 4 C-Atomen, Phenylen, Alkylen-phenylen, Phenylen-alkylen oder eine direkte Bindung im Falle von (a + b) gleich 1 oder größer als 1;
- R^{A}: ist Wasserstoff, Alkoxy von 1 bis 8 C-Atomen, vorzugsweise von 1 bis 4 C-Atomen, wie Methoxy und Ethoxy, Halogen, wie Chlor und Brom, Hydroxy, Alkoxy von 2 bis 4 C-Atomen, vorzugsweise Ethoxy, das durch Alkoxy von 1 bis 4 C-Atomen, vorzugsweise Methoxy und Ethoxy, substituiert ist, N-Morpholino, N-Imidazolino oder eine Gruppe der Formel 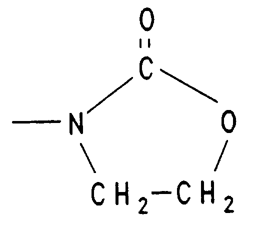 vorzugsweise Alkoxy von 1 bis 4 C-Atomen und durch Alkoxy von 1 bis 4 C-Atomen substituiertes Alkoxy von 2 bis 4 C-Atomen und insbesondere Hydroxy;
- R^{B}: hat eine der für R^{A} genannten Bedeutungen oder ist Alkyl von 1 bis 4 C-Atomen, wie Methyl und Ethyl;
- R^{C}: ist Wasserstoff, Alkoxy von 1 bis 8 C-Atomen, vorzugsweise von 1 bis 4 C-Atomen, wie Ethoxy und Methoxy, das durch Alkoxy von 1 bis 4 C-Atomen substituiert sein kann, Halogen, wie Chlor und Brom, Hydroxy, Alkyl von 1 bis 8 C-Atomen, vorzugsweise von 1 bis 4 C-Atomen, wie Ethyl und Methyl, Alkenyl von 2 bis 8 C-Atomen, vorzugsweise von 2 bis 4 C-Atomen, Alkinyl von 3 bis 8 C-Atomen, vorzugsweise von 3 bis 5 C-Atomen, oder ist Phenyl und ist vorzugsweise Alkoxy von 1 bis 4 C-Atomen, durch Alkoxy von 1 bis 4 C-Atomen substituiertes Alkoxy von 2 bis 4 C-Atomen und insbesondere Alkyl von 1 bis 4 C-Atomen oder Hydroxy;
- U: ist eine Gruppe der allgemeinen Formel (5a) oder (5b)

-O-R^{H} (5a)

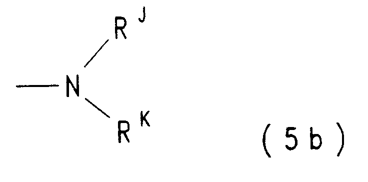

in welchen

- R^{H}: Alkyl von 1 bis 6 C-Atomen, vorzugsweise von 1 bis 4 C-Atomen, ist, das durch Phenyl, Sulfophenyl, Sulfo, Sulfato oder Carboxy substituiert sein kann, oder Phenyl ist, das durch 1 oder 2 Substituenten aus der Gruppe Methyl, Ethyl, Methoxy, Ethoxy, Sulfo, Carboxy und Chlor substituiert sein kann.
- R^{J}: Wasserstoff, Alkyl von 1 bis 6 C-Atomen, vorzugsweise von 1 bis 4 C-Atomen, ist, das durch Alkanoyloxy von 2 bis 5 C-Atomen, Sulfo, Sulfato, Carboxy, Phosphato, Phenyl, Sulfophenyl oder Cyano substituiert sein kann, oder Cycloalkylen von 5 bis 8 C-Atomen, wie beispielsweise Cyclohexylen, ist und
- R^{K}: Wasserstoff, Alkyl von 1 bis 6 C-Atomen, vorzugsweise von 1 bis 4 C-Atomen ist, das durch Alkanoyloxy von 2 bis 5 C-Atomen, Sulfo, Sulfato, Carboxy, Phosphato, Phenyl, Sulfophenyl oder Cyano substituiert sein kann, oder Phenyl ist, das durch 1 oder 2 Substituenten aus der Gruppe Methyl, Ethyl, Methoxy, Ethoxy, Sulfo, Carboxy, Sulfamoyl, Carbamoyl und Chlor substituiert sein kann.

Der Formelrest R in den Formeln (2A) und (2B) ist bevorzugt Wasserstoff und insbesondere Methyl und Ethyl. Sofern der Index s in Formel (1) die Zahl 2 oder 3 bedeutet, können die Reste Z zueinander gleiche oder voneinander verschiedene Bedeutungen besitzen. Alkylgruppen sind bevorzugt Methyl und Ethyl, Alkoxygruppen bevorzugt Methoxy und Ethoxy und Alkanoylaminogruppen und Alkanoyloxygruppen bevorzugt Acetylamino bzw. Acetyloxy. Alkylenreste sind bevorzugt solche von 2 bis 4 C-Atomen.

Die für die obigen und auch nachstehenden Formelreste erwähnten Alkyl-, Alkenyl- und Alkylenreste können geradkettig oder verzweigt sein. Die einzelnen Formelreste können, im Rahmen ihre gegebenen Bedeutung, zueinander gleiche oder voneinander verschiedene Bedeutungen besitzen.

Bevorzugt ist der Rest der allgemeinen Formel (4) ein Rest der allgemeinen Formel (4a), (4b), (4c), (4d), (4e), (4f), (4g), (4h) oder (4i) 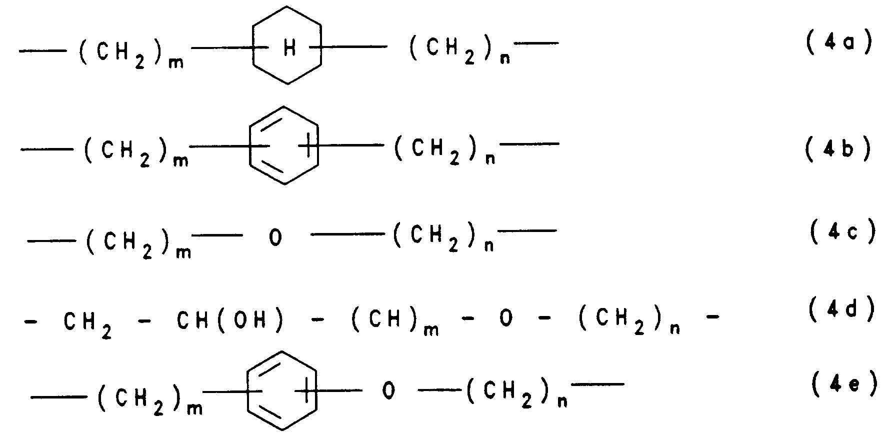 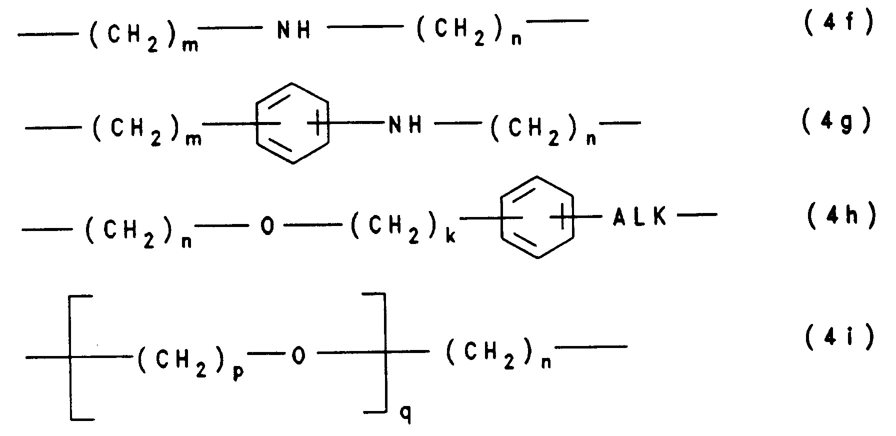
in welchen
- m: eine ganze Zahl von Null bis 6, vorzugsweise von 1 bis 4, bedeutet,
- n: eine ganze Zahl von 1 bis 6, vorzugsweise von 2 bis 4, ist,
- k: eine ganze Zahl von Null bis 4, vorzugsweise 1 oder 2, ist,
- p: eine ganze Zahl von 1 bis 4, vorzugsweise 2 oder 3, ist,
- q: eine ganze Zahl von 1 bis 10, vorzugsweise von 1 bis 5 und insbesondere 1, ist und
- ALK: einen geradkettigen oder verzweigten Alkylenrest von 1 bis 8 C-Atomen bedeutet, wobei der verzweigte Alkylenrest vorzugsweise ein Rest der Formel

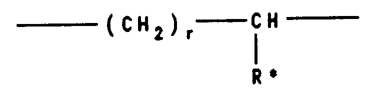

ist, in welcher r eine ganze Zahl von 1 bis 4 ist und R* für Alkyl von 1 bis 3 C-Atomen steht.

Bevorzugt ist F der Rest eines Mono- oder Disazofarbstoffes oder der Rest eines Metallkomplex-Azofarbstoffes, wie eines 1:1-Kupferkomplex-Monoazo- oder -Disazofarbstoffes, oder eines Triphendioxazin-, eines Anthrachinon-, Kupferformazan- oder Phthalocyaninfarbstoffes, wie eines Kupferphthalocyaninfarbstoffes.

Der Rest F kann in seinem Grundgerüst die bei organischen Farbstoffen üblichen Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-(C₁-C₄-Alkyl)-N-phenyl-amino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl-sulfamoyl-, Ureido-, Hydroxy-, Carboxy-, Sulfomethyl- und Sulfogruppen.

Vorzugsweise ist der Farbstoffrest F durch eine oder mehrere, wie 2 bis 6, Sulfogruppen substituiert, und gegebenenfalls weitere Substituenten sind bevorzugt solche aus der Gruppe Methyl, Ethyl, Methoxy, Ethoxy, Alkanoylamino von 2 bis 5 C-Atomen, wie Acetylamino, Benzoylamino, Sulfobenzoylamino, Amino, Chlor, Brom, Ureido, Alkylureido mit einem Alkylrest von 1 bis 4 C-Atomen, Hydroxy, Trifluormethyl, Carboxy und Sulfomethyl.

Wichtige Azofarbstoffe entsprechend der allgemeinen Formel (1) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (10a), (10b) und (10c)

D₁ - N = N - (E - N = N)ᵥ - K₂ - Z (10a)

Z - D₂ - N = N - (E - N = N)ᵥ - K₁ (10b)

Z - D₂ - N = N - (E - N = N)ᵥ - K₂ - Z (10c)

und die davon abgeleiteten Schwermetallkomplex-Verbindungen, wie 1:1-Kupferkomplex-Verbindungen,
in welchen
- D₁: der Rest einer Diazokomponente der Benzol- oder Naphthalinreihe ist,
- D₂: der Rest einer Diazokomponente der Diaminobenzol- oder Diaminonaphthalin-Reihe ist,
- E: der Rest einer Mittelkomponente der Benzol- oder Naphthalinreihe bedeutet,
- K₁: der Rest einer Kupplungskomponente der Benzol-, Naphthalin-, Pyrazolon-, 6-Hydroxypyridon(2)- oder Acetessigsäurearylamid-Reihe ist,
- K₂: ein Rest der Anilin-, Aminonaphthalin- oder 1-Aminophenyl-pyrazolon-Reihe ist,
- wobei: D₁, D₂, E, K₁ und K₂ für Azofarbstoffe übliche Substitutenten, wie die zuvor genannten, enthalten können, wie beispielsweise Hydroxy-, Amino-, Methyl-, Methoxy-, Ethoxy-, Sulfo-, Carboxy-, Ureido-, (C₁-C₄)-Alkylureido-, Phenylureido-, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, und zusammen mindestens eine, bevorzugt mindestens zwei, vorzugsweise drei bis fünf, Sulfogruppen besitzen,
- v: für die Zahl Null oder 1 steht und
- Z: eine Gruppe der Formel (2A) oder (2B) ist.

Bevorzugt sind weiterhin Disazofarbstoffe der allgemeinen Formel (10d) oder (10e)

D₁ - N = N - K^{o} - N = N - D₂ - Z (10d)

Z - D₂ - N = N - K^{o} - N = N - D₂ - Z (10e)

in welchen Z die obengenannte Bedeutung besitzt, D₁ und D₂, jeweils untereinander gleich oder verschieden, jedes den Rest einer Diazokomponente der Benzol- oder Naphthalinreihe bedeutet und K^{o} den Rest einer bivalenten Kupplungskomponente der Naphthalinreihe darstellt, wobei D₁, D₂ und K^{o} die für Azofarbstoffe üblichen Substituenten, wie die oben bereits erwähnten, tragen können, wobei D₁, D₂ und K^{o} zusammen mindestens zwei wasserlöslich-machende Gruppen, wie Sulfo-, Carboxy-, Sulfato- und Phosphatogruppen, wie 2 bis 5 dieser Gruppen, enthalten.

Azofarbstoffe der allgemeinen Formel (1) sind insbesondere Farbstoffe der allgemeinen Formeln (10f), (10g) und (10h) 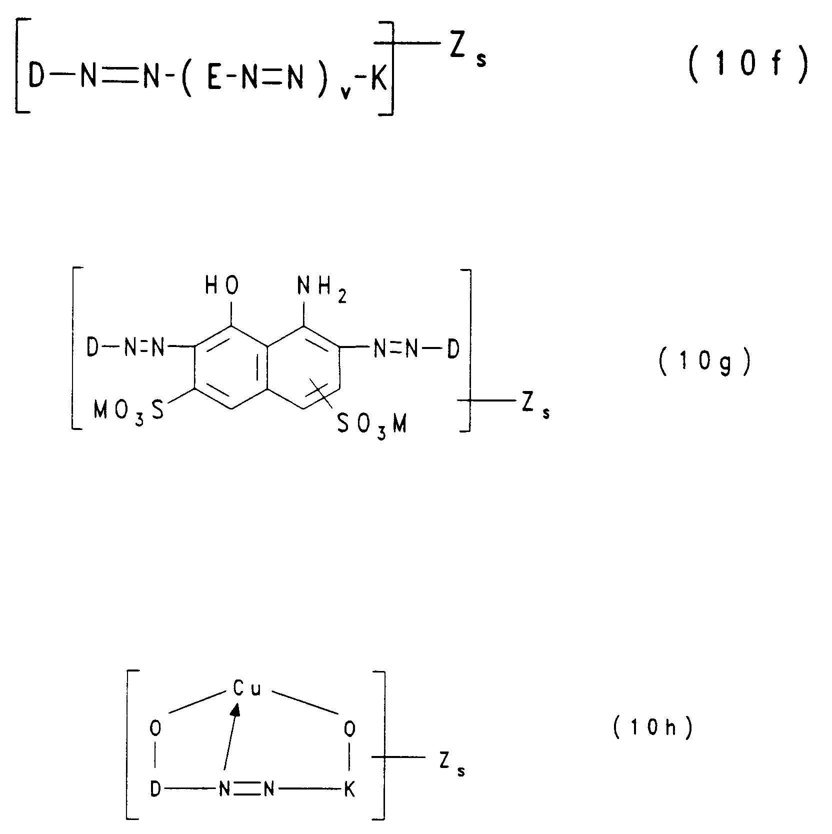
in welchen
- Z: eine Gruppe allgemeinen Formel (2A) oder (2B) bedeutet,
- s: die Zahl 1 oder 2, bevorzugt 1, ist,
der Rest Z an den Rest D oder den Rest K oder im Falle von s = 2 jeweils an D und K bzw. an beide D gebunden ist, wobei beide Z bevorzugt nicht gleichzeitig an ein oder dasselbe D oder an ein K gebunden sind,
- D: jeweils für den Rest einer Diazokomponente, an die noch ein Azorest gebunden sein kann, steht und die zueinander gleiche oder voneinander verschiedene Bedeutungen besitzen können, und beispielsweise einen Rest D₁ obiger oder nachstehender Bedeutung darstellt,
- E: den bivalenten Rest einer kupplungsfähigen und diazotierbaren Verbindung, beispielsweise obiger oder nachstehender Bedeutung, bedeutet,
- K: den Rest einer Kupplungskomponente, an die noch ein Azorest gebunden sein kann, darstellt, beispielsweise obiger oder nachstehender Bedeutung,
- v: für die Zahl Null oder 1 steht und
- M: ein Wasserstoffatom oder ein Alkalimetall, wie Natrium, Kalium oder Lithium, ist.

Bevorzugte erfindungsgemäße Metallkomplex-Azofarbstoffe sind beispielsweise Kupferkomplex-Azofarbstoffe der allgemeinen Formel (10j) 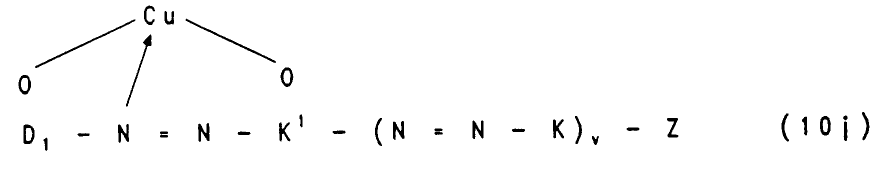
in welcher D₁, K, v und Z eine der für die Formeln (10) genannten Bedeutungen haben und D₁ bevorzugt ein nachstehend aus der Formel (11c) oder (11d) ersichtlicher Rest ist und K¹ den Rest einer ursprünglich amino- und hydroxygruppenhaltigen Kupplungskomponente bedeutet, wie bevorzugt den Rest eines gegebenenfalls durch 1 oder 2 Sulfogruppen substituierten Aminonaphthols ist, und wobei die beiden das Kupfer komplex bindenden Oxigruppen in ortho-Stellung bzw. vicinaler Stellung zur Azogruppe an D₁ und K¹ gebunden sind.

Aromatische Reste von Diazokomponenten, die keine Gruppe Z tragen, wie von solchen, die den allgemeinen Formeln D-NH₂ bzw. D₁-NH₂ bzw. R^{G}-D-NH₂ entsprechen, sind beispielsweise Gruppen der allgemeinen Formel (11a), (11b), (11c) und (11d) 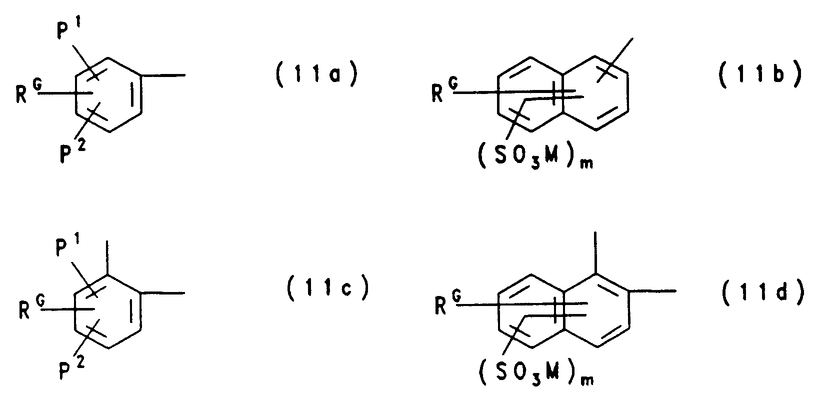
in welchen
- R^{G}: Wasserstoff oder Sulfo ist,
- P¹: Wasserstoff, Methyl, Ethyl, Methoxy, Ethoxy, Alkanoyl von 2 bis 5 C-Atomen, wie Acetyl und Propionyl, Cyano, Sulfo, Carboxy, Alkoxycarbonyl von 2 bis 5 C-Atomen, wie Methoxycarbonyl und Ethoxycarbonyl, Carbamoyl, N-(C₁-C₄-Alkyl)-carbamoyl, Fluor, Chlor, Brom oder Trifluormethyl ist,
- P²: Wasserstoff, Methyl, Ethyl, Methoxy, Ethoxy, Cyan, Carboxy, Sulfo, Alkanoylamino von 2 bis 5 C-Atomen, wie Acerylamino, Alkoxycarbonyl von 2 bis 5 C-Atomen, wie Methoxycarbonyl und Ethoxycarbonyl, Carbamoyl, N-(C₁-C₄-Alkyl)-sulfamoyl, Sulfophenylamidocarbonyl, Alkylsulfonyl von 1 bis 4 C-Atomen, Phenylsulfonyl oder Phenoxy ist,
wobei der Benzolkern in Formel (11a) und (11b) zusätzlich in ortho-Stellung zur freien Bindung, die an die Azogruppe führt, eine Hydroxygruppe enthalten kann,
- m: die Zahl Null, 1 oder 2 bedeutet (wobei diese Gruppe im Falle von m gleich Null ein Wasserstoffatom bedeutet) und
- M: die obengenannte Bedeutung hat.

Bevorzugt ist hiervon P¹ gleich Wasserstoff, Methyl, Methoxy, Brom, Chlor, Sulfo und Carboxy sowie P² gleich Wasserstoff, Methyl, Methoxy, Chlor, Carboxy, Sulfo und Acetylamino.

Aromatische Reste Z-D- bzw. Z-D₂- sind bevorzugt Reste der allgemeinen Formeln (12a) und (12b) 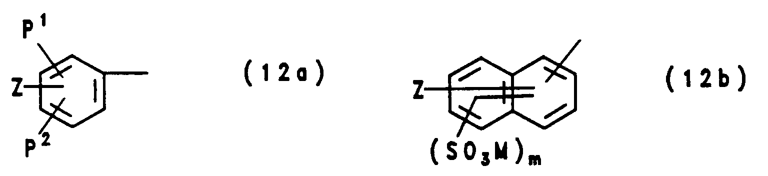
in welchen Z, M, m, P¹ und P² die für Formeln (10) und (11) angegebenen, insbesondere bevorzugten, Bedeutungen haben, wobei der Benzolkern in ortho-Stellung zur freien Bindung, die zur Azogruppe führt, zusätzlich eine Hydroxygruppe enthalten kann.

Aromatische Reste E einer kupplungsfähigen und diazotierbaren Verbindung der allgemeinen Formel H-E-NH₂ sind beispielsweise solche der allgemeinen Formeln (13a), (13b) und (13c) 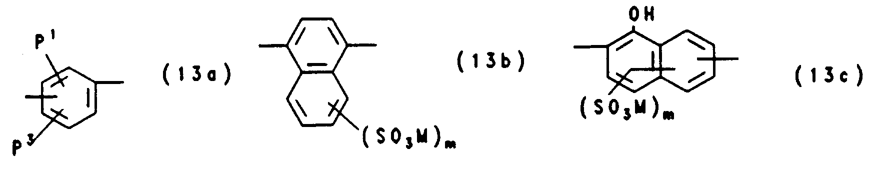
in welchen
- P¹, M und m: die für Formeln (10) und (11) angegebenen Bedeutungen haben und
- P³: Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist.

Gruppen K bzw. K₁ von Kupplungskomponenten der allgemeinen Formel H-K bzw. H-K₁ , die keine Gruppe Z tragen, sind beispielsweise solche der allgemeinen Formeln (14a) bis (14h) 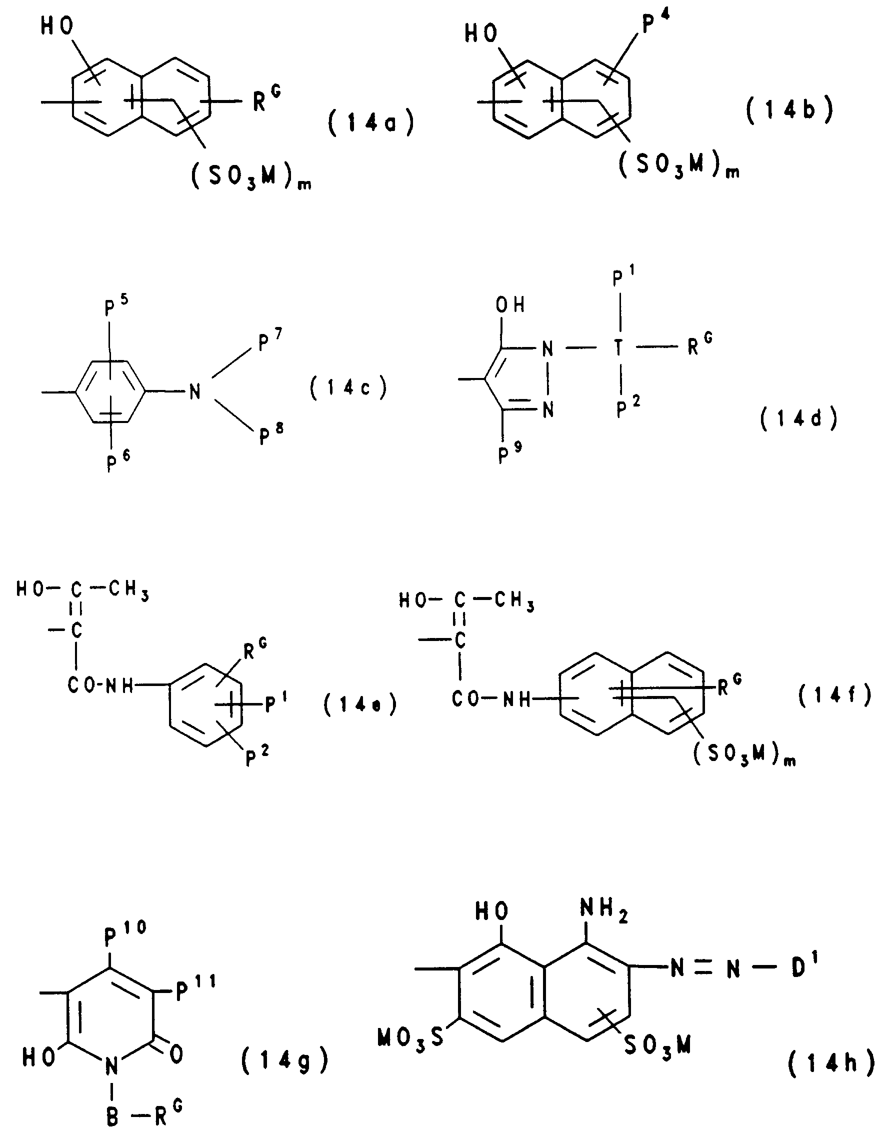
in welchen
- R^{G}, P¹, P², m und M: die für Formeln (10) und (11) genannten Bedeutungen haben,
- P⁴: Phenylureido ist, das im Phenylrest durch Substituenten aus der Gruppe Chlor, Methyl, Methoxy, Sulfo und Carboxy substituiert sein kann, oder Benzoylamino ist, das im Benzolrest durch Substituenten aus der Gruppe Chlor, Methyl, Methoxy, Nitro, Sulfo und Carboxy substituiert sein kann,
- P⁵: Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,
- P⁶: Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist,
- P⁷: Wasserstofff oder Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann,
- P⁸: Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist,
- P⁹: Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist,
- T: für einen Benzol- oder Naphthalinring, bevorzugt Benzolring, steht,
- P¹⁰: Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen ist, bevorzugt Alkyl von 1 bis 4 C-Atomen oder Phenyl ist,
- P¹¹: Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,
- B: Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und
- D¹: ein Rest der allgemeinen Formel (11a) oder (11b) ist.

Gruppen -K-Z bzw. -K₂-Z sind beispielsweise solche der allgemeinen Formeln (15a) bis (15h) 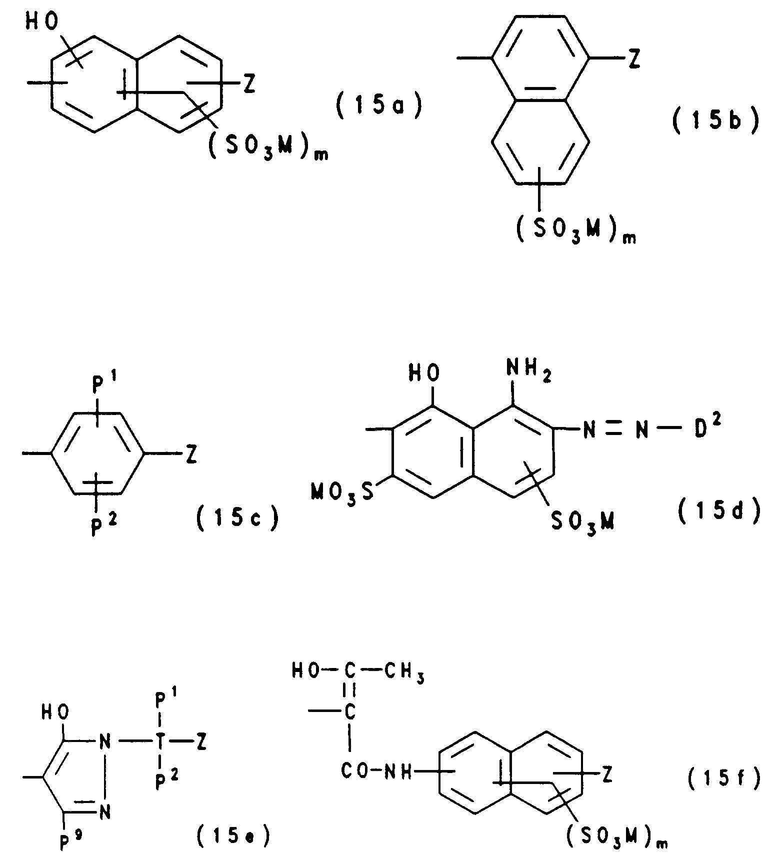 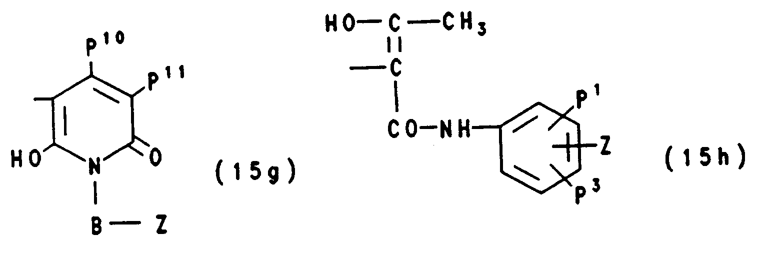
in welchen
R, P¹, P², P⁹, P¹⁰, P¹¹, B, T, M, m und Z die für Formeln (10) bis (14) angegebenen, insbesondere bevorzugten, Bedeutungen haben und
- D²: als Rest einer Diazokomponente ein Rest der obengenannten und definierten allgemeinen Formel (12a) oder (12b) ist.

In den obigen Formeln (14a), (14b) und (15a) steht die freie Bindung, die zur Azogruppe führt, in ortho-Stellung zur Hydroxygruppe an den aromatischen Kern gebunden.

Gruppen K bzw. K¹ in den Formeln (10h) und (10j) mit einem metallkomplexbindenden Sauerstoffatom, die die Gruppe Z enthalten, sind insbesondere solche der Formeln (16a) bis (16e) 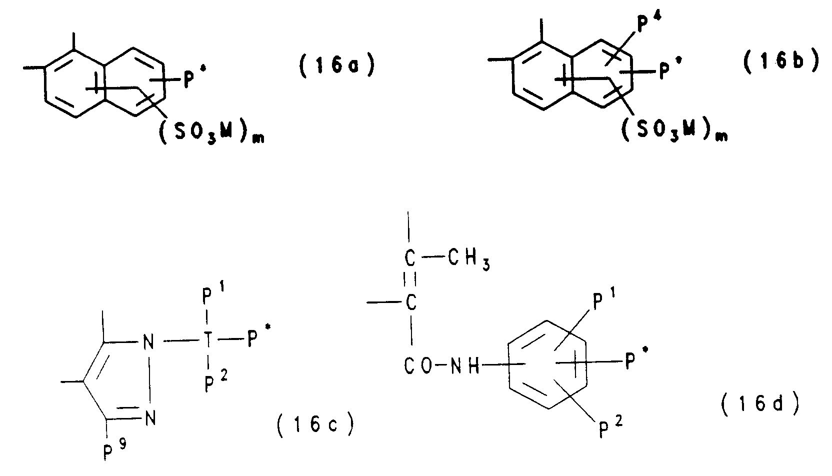 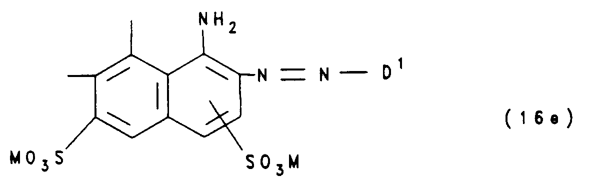
in welchen die einzelnen Formelglieder eine der für Formeln (10) bis (14) genannten Bedeutungen haben und P* entweder einen Rest Z oder eine Gruppierung der Formel -N=N-K-Z bedeutet.

Von den Azofarbstoffen sind weiterhin bevorzugt solche, die den allgemeinen Formeln (20A) bis (20R) 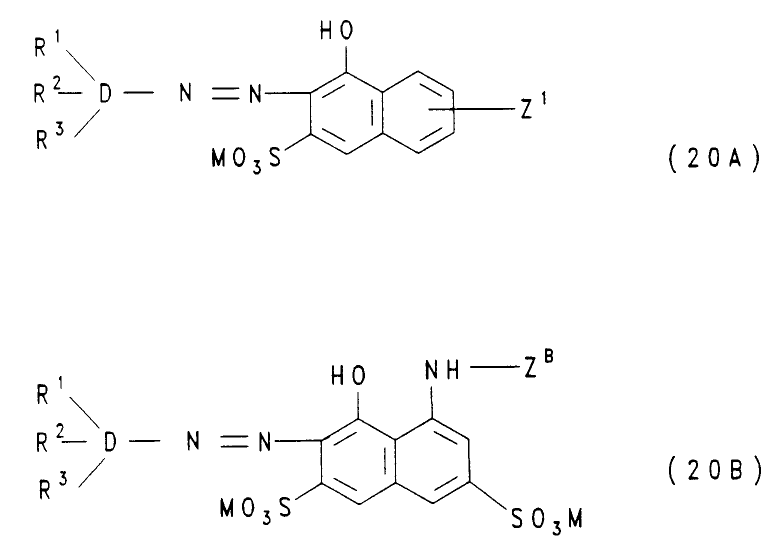 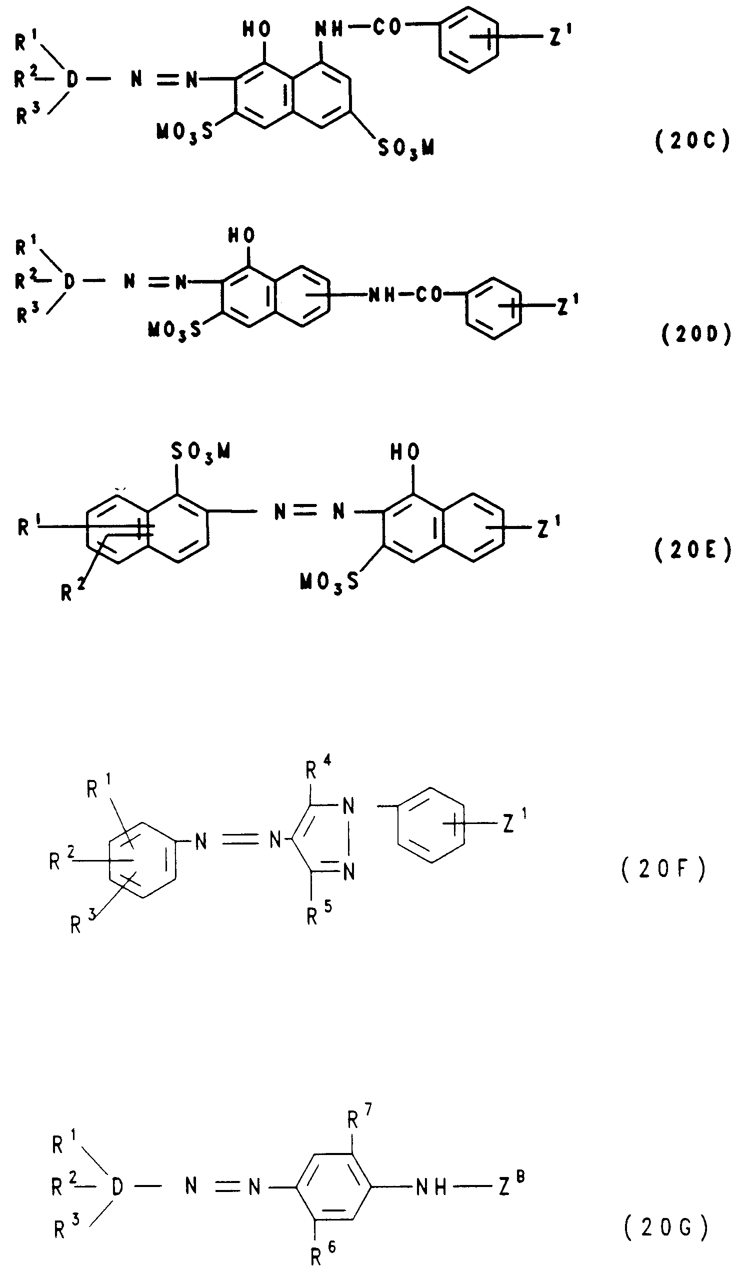 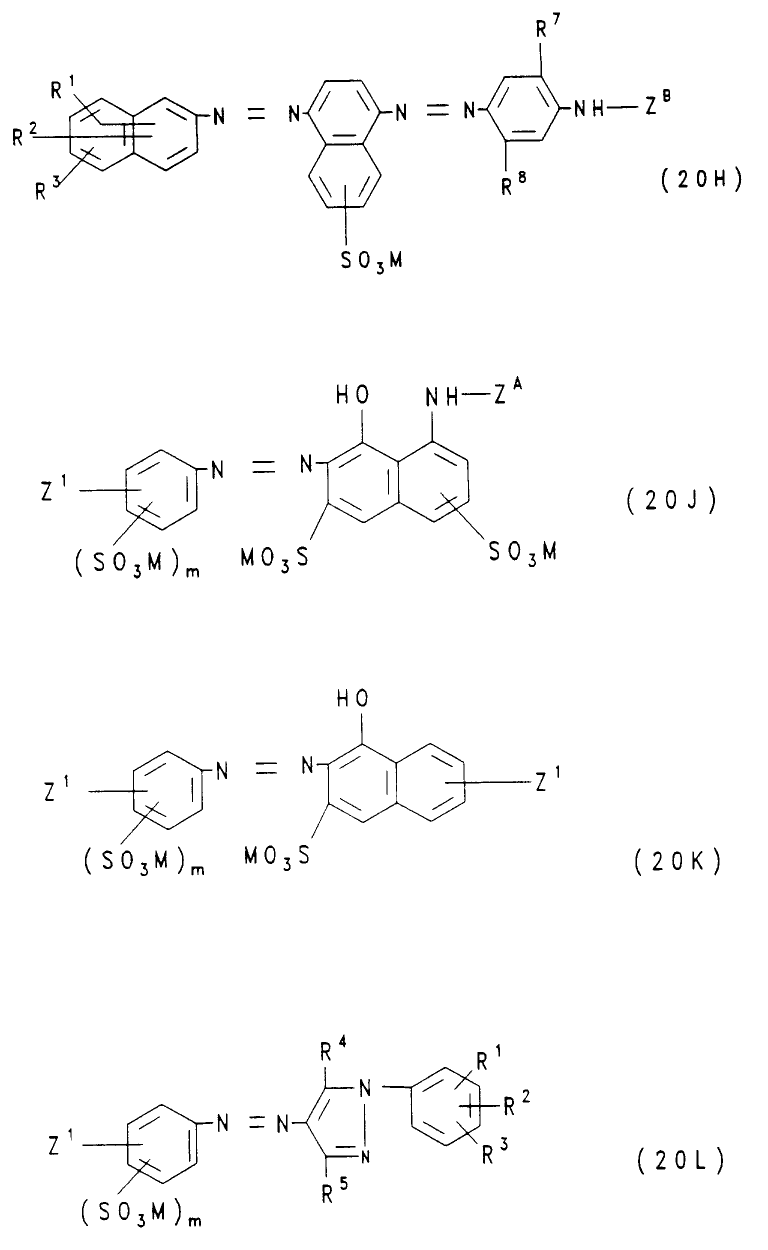 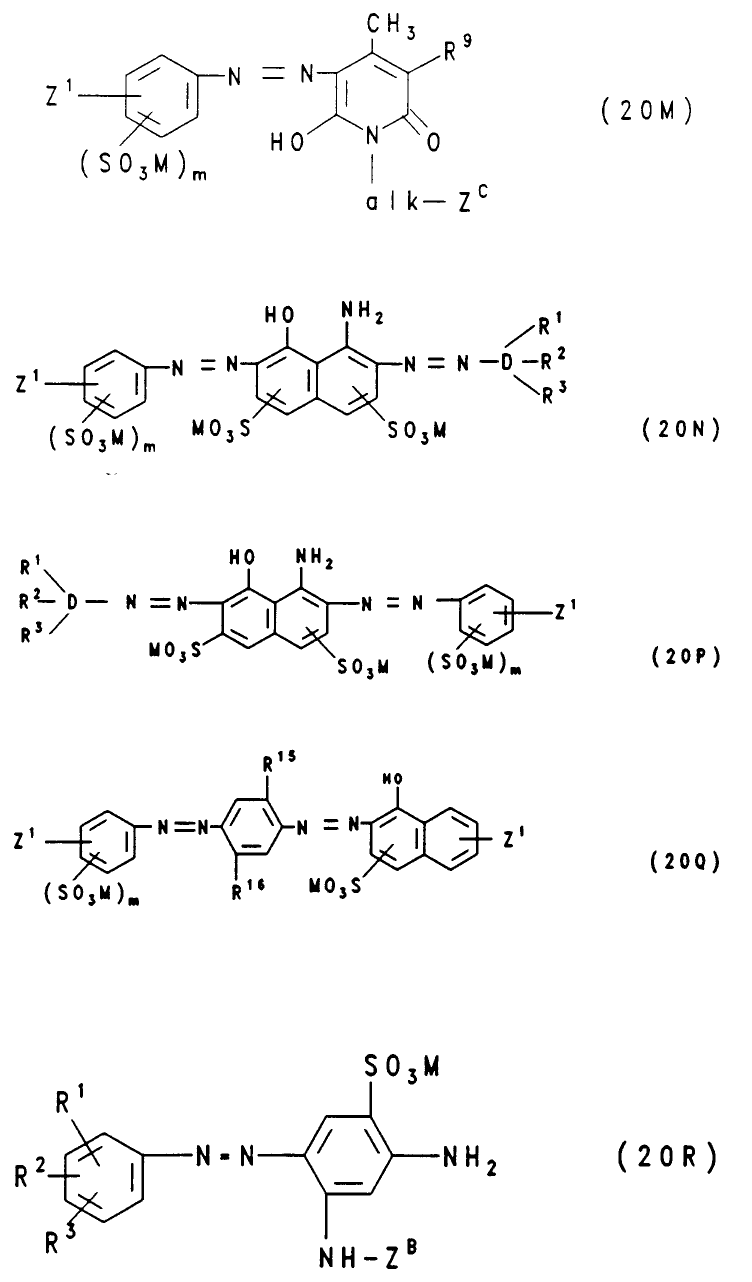
entsprechen, in welchen bedeuten:
- Z¹: ist eine Gruppe der allgemeinen Formel (2A) oder (2B) der obengenannten, insbesondere bevorzugten Bedeutung;
- Z^{A}: ist eine Gruppe der allgemeinen Formel (2AA) 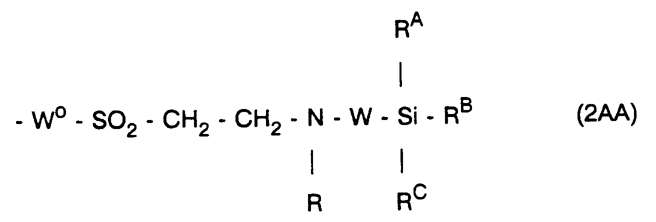 in welchen die einzelnen Formelglieder einen der anfangs für Formel (1) angegebenen, insbesondere bevorzugten, Bedeutungen haben;
- Z^{B}: ist eine Gruppe der allgemeinen Formel (2BB) 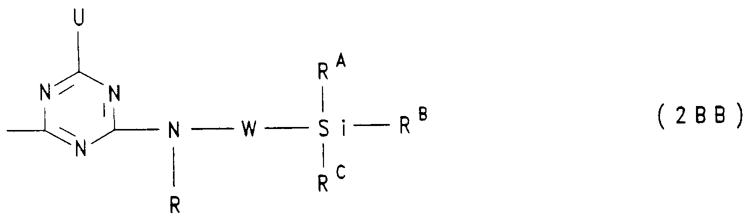 in welcher U, R, W, R^{A}, R^{B} und R^{C} die für Formel (1) genannten, insbesondere bevorzugten, Bedeutungen haben;
- Z^{C}: ist eine Gruppe der allgemeinen Formel (2CC) 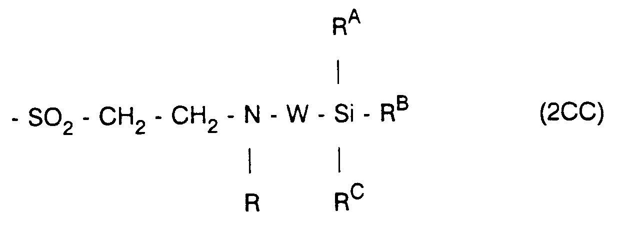 mit R, W, R^{A}, R^{B} und R^{C} der für Formel (1) genannten, insbesondere bevorzugten Bedeutungen;
- D: ist ein Benzolring oder ein Naphthalinring, wobei die Azogruppen an den Naphthalinring bevorzugt in β-Stellung gebunden ist und wobei im Falle, daß
- D: den Naphthalinring bedeutet, R² und R³ bevorzugt jedes, unabhängig voneinander, ein Wasserstoffatom oder eine Sulfogruppe bedeuten;
- R¹: ist Wasserstoff, Sulfo- oder ein Rest Z¹ ;
- R²: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff;
- R³: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff;
- R⁴: ist Hydroxy oder Amino, bevorzugt Hydroxy;
- R⁵: ist Methyl, Carboxy, Carbomethoxy oder Carbethoxy, bevorzugt Methyl oder Carboxy;
- R⁶: ist Acetylamino, Ureido oder Methyl;
- R⁷: ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy, Ethoxy oder Chlor;
- R⁸: ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;
- R⁹: ist Wasserstoff, Cyano, Carbamoyl, Sulfamoyl oder Sulfomethyl, bevorzugt Wasserstoff oder Carbamoyl;
- R¹⁰: ist Cyano, Carbamoyl oder Sulfomethyl;
- alk: ist Alkylen von 2 bis 4 C-Atomen, vorzugsweise Ethylen;
- m: ist die Zahl Null, 1 oder 2 (wobei im Falle von m gleich Null diese Gruppe Wasserstoff ist);
- q: steht für die Zahl Null oder 1 (wobei im Falle von q gleich Null diese Gruppe Wasserstoff bedeutet);
- t: steht für die Zahl 2 oder 3;
in den Verbindungen der Formeln (20A), (20D), (20E), (20K) und (20Q) steht die Gruppe Z¹ in 2- oder 3-Stellung an den 8-Naphthol-Rest gebunden.

Von den erfindungsgemäßen Anthrachinonfarbstoffen sind insbesondere diejenigen zu erwähnen, die der allgemeinen Formel (21) 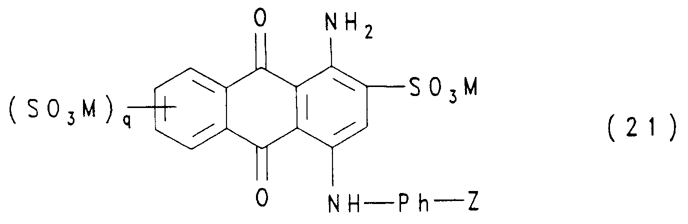
entsprechen, in welcher
- M und: Z eine der obengenannten Bedeutungen haben,
- q: die Zahl Null oder 1 ist (wobei im Falle von q gleich Null diese Gruppe Wasserstoff bedeutet) und
- Ph: ein Phenylenrest ist, der durch 1 oder 2 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann.

Von den erfindungsgemäßen Triphendioxazinfarbstoffen sind diejenigen hervorzuheben, die der allgemeinen Formel (22) 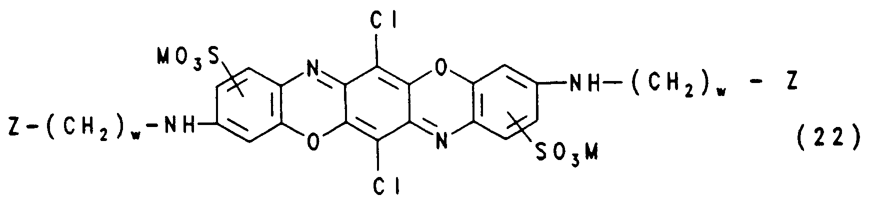
entsprechen, in welcher M und Z eine der obengenannten Bedeutungen haben und w für die Zahl 2, 3 oder 4 steht, wobei die beiden Sulfogruppen -SO₃M bevorzugt in ortho-Stellung zum Sauerstoffatom des heterocyclischen Ringes an den Benzolkern gebunden sind.

Von den erfindungsgemäßen Phthalocyaninfarbstoffen sind diejenigen bevorzugt, die der allgemeinen Formel (23) 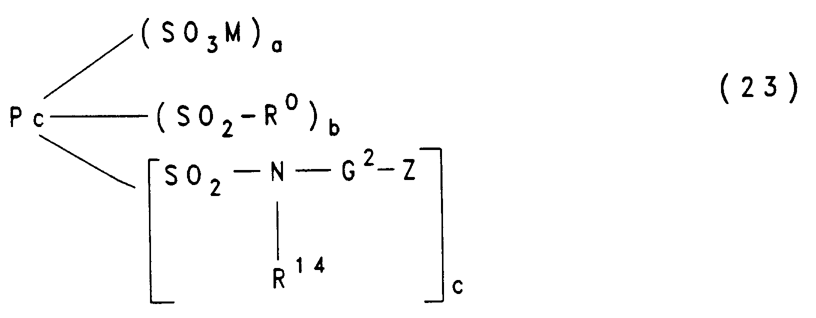
entsprechen, in welcher bedeuten:
- Pc: ist der Rest eines Kupfer- oder Nickelphthalocyanins;
- R^{O}: ist eine Aminogruppe der Formel -NR¹¹R¹², in welcher R¹¹ und R¹² unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest, wie der Morpholino- oder Piperidino-Rest;
- R¹⁴: ist ein Wasserstoff oder Alkyl von 1 bis 4 C-Atomen, wie Methyl und Ethyl;
- G²: ist eine direkte Bindung oder ist Phenylen, das durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, beispielsweise Sulfophenylen, oder ist Alkylen von 2 bis 6 C-Atomen, wie Ethylen;
- Z: ist eine Gruppe Z^{A}, Z^{B} oder Z^{C} obiger Bedeutung;
- a: ist eine Zahl von Null bis 3,
- b: ist eine Zahl von Null bis 3 und
- c: ist eine Zahl von 1 bis 2,
wobei die Summe von (a+b+c) gleich einer Zahl von 2 bis 4 ist.

Erfindungsgemäße Kupferformazanfarbstoffe sind insbesondere diejenigen, die der allgemeinen Formel (24) 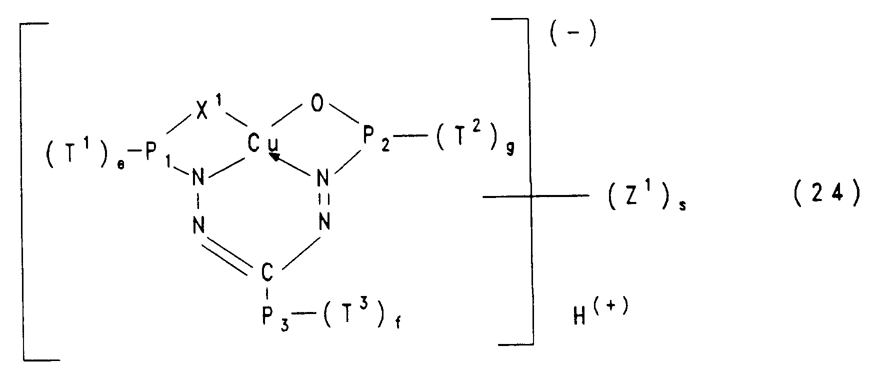
entsprechen, in welcher bedeuten:
- X¹: ist ein Sauerstoffatom oder bevorzugt die Carbonyloxygruppe der Formel -COO- ;
- P₁ und P₂: bedeuten unabhängig voneinander, jedes einen Benzol- oder Naphthalinring, wobei P₁ das Stickstoffatom und die Gruppe X ortho-ständig zueinander und P₂ das Sauerstoffatom und das Stickstoffatom ortho-ständig zueinander gebunden enthalten und die Benzolkerne bzw. Napthalinkerne noch durch einen oder zwei Substituenten aus der Gruppe Halogen, wie Chlor, Nitro, Alkyl von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können, wobei sowohl P₁ als auch P₂ beide bevorzugt einen Benzolring bedeuten;
- P₃: ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können, wobei P₃ bevorzugt ein Benzolring ist;
- T¹, T² und T³: bedeuten, unabhängig voneinander, jedes eine Sulfo- oder Carboxygruppe, bevorzugt Sulfogruppe;
- e, f und g: stellen, unabhängig voneinander, jedes die Zahl Null, 1 oder 2 dar, wobei die Summe von (e+f+g) eine ganze Zahl von 1 bis 4 bedeutet und vorzugsweise 2 oder 3, insbesondere 2, ist, wobei im Falle von e oder f oder g gleich Null die Gruppe T¹ bzw. T² bzw. T³ ein Wasserstoffatom bedeutet;
- s: steht für die Zahl 1 oder 2, bevorzugt 1, wobei die Gruppe Z¹ an einen aromatischen Rest von P₁, P₂ oder P₃ gebunden sein kann und bevorzugt an P₂ gebunden ist.

Bevorzugt sind von den Kupferformazanfarbstoffen der allgemeinen Formel (24) diejenigen, in welchen P₁ und P₂ beide für einen Benzolring stehen, die Gruppe Z¹ an P₂ gebunden ist und T¹ und T² jedes eine Sulfogruppe bedeutet, wobei e und g beide für die Zahl 1 stehen. Sofern die Gruppe Z¹ an P₁ gebunden ist, ist e die Zahl Null, g die Zahl 2 und T² eine Sulfogruppe. Bevorzugt ist weiterhin die Gruppierung -P₃-(T³)_{f} der Phenyl- oder ein 2- oder 4-Sulfo-phenyl-Rest.

Die vorliegende Erfindung betrifft weiterhin ein Verfahren zur Herstellung der erfindungsgemäßen Farbstoffe der allgemeinen Formel (1), das dadurch gekennzeichnet ist, daß man eine Verbindung der allgemeinen Formel (6)

F-( Z^{o}) ₛ (6)

in welcher F und s eine der oben genannten Bedeutungen besitzen und Z^{o} ein Rest der allgemeinen Formel (7a), (7b) oder (7c)

-Q-SO₂-CH= CH₂ (7a)

-Q-SO₂-CH₂-CH₂-V (7b)

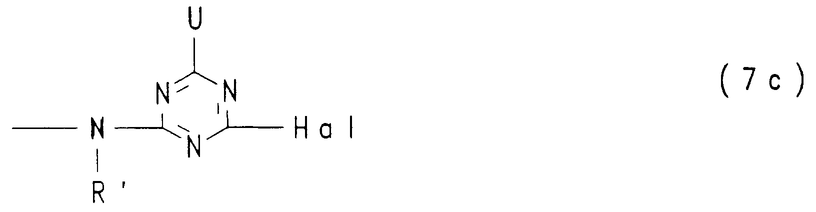

ist, in welchen
- Q, U und R': eine der oben für Formel (1) angegebenen Bedeutungen haben,
- V: Chlor, Sulfato oder Thiosulfato ist und
- Hal: für ein Halogenatom, wie für Fluor, Brom und insbesondere Chlor, steht,
mit einer Verbindung der allgemeinen Formel (8) 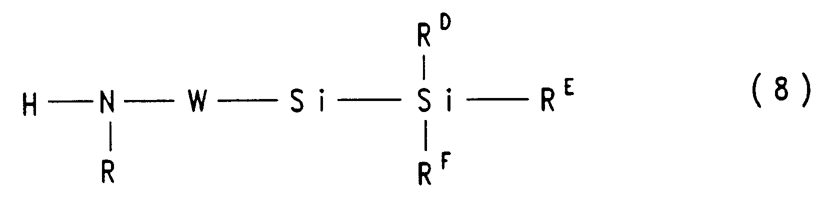
umsetzt, in welcher bedeuten:
- R und W: haben eine der anfangs für Formel (1) bzw. (2A) angegebenen Bedeutungen;
- R^{D}: ist Alkoxy von 1 bis 8 C-Atomen, vorzugsweise von 1 bis 4 C-Atomen, wie Methoxy und Ethoxy, Wasserstoff, Halogen, wie Chlor und Brom, Hydroxy, Alkoxy von 2 bis 4 C-Atomen, vorzugsweise Ethoxy, das durch Alkoxy von 1 bis 4 C-Atomen, vorzugsweise Methoxy und Ethoxy, substituiert ist,
N-Morpholino, N-Imidazolino oder eine Gruppe der Formel 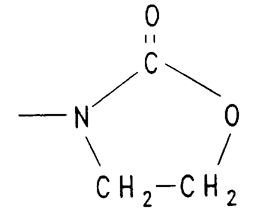 vorzugsweise Alkoxy von 1 bis 4 C-Atomen und durch Alkoxy von 2 bis 4 C-Atomen substituiertes Alkoxy von 2 bis 4 C-Atomen;
- R^{E}: hat eine der für R^{A} genannten Bedeutungen oder ist Alkyl von 1 bis 4 C-Atomen;
- R^{F}: ist Alkoxy von 1 bis 8 C-Atomen, vorzugsweise von 1 bis 4 C-Atomen, wie Ethoxy und Methoxy, das durch Alkoxy von 1 bis 4 C-Atomen substituiert sein kann, oder ist Wasserstoff, Halogen, wie Chlor und Brom, Hydroxy, Alkyl von 1 bis 8 C-Atomen, vorzugsweise von 1 bis 4 C-Atomen, wie Ethyl und Methyl, Alkenyl von 2 bis 8 C-Atomen, vorzugsweise von 2 bis 4 C-Atomen, Alkinyl von 3 bis 8 C-Atomen, vorzugsweise von 3 bis 5 C-Atomen, oder ist Phenyl oder hat eine der für R^{D} genannten Bedeutungen und ist vorzugsweise Alkyl von 1 bis 4 C-Atomen, Alkoxy von 1 bis 4 C-Atomen, durch Alkoxy von 1 bis 4 C-Atomen substituiertes Alkoxy von 2 bis 4 C-Atomen.

Die Umsetzung zwischen diesen Ausgangsverbindungen kann in wäßriger Lösung und ebenso in wäßrig-organischer oder rein organischer Lösung erfolgen, wobei das organische Lösemittel ein aprotisches polares, gegenüber den Reaktanten inertes Lösemittel ist, wie beispielsweise Dimethylsulfoxyd und Dimethylformamid. Die Umsetzung erfolgt in der Regel bei einer Temperatur zwischen 10 und 60°C, bevorzugt zwischen 15 und 40°C, sofern der Rest Z^{O} in der Ausgangsverbindung der Formel (6) ein Rest der Formel (7a) oder (7b) ist, und bevorzugt bei einer Temperatur zwischen 30 und 50°C, sofern der Rest Z^{O} in der Ausgangsverbindung (6) ein Rest der Formel (7c) ist.

Erfolgt die Umsetzung der Verbindungen (6) und (8) in wäßriger oder wäßrig-organischer Lösung, so werden in der Regel die am Siliciumatom stehenden Substituenten R^{D}, die hydrolysierfähig sind, und die entsprechenden hydrolysierfähigen Substituenten von R^{E} und R^{F} zur Hydroxygruppe hydrolysiert, so daß in dem erhaltenen Farbstoff der Formel (1) der Substituent R^{A} und entsprechend bei R^{B} und R^{C}, sofern deren Ausgangssubstituenten in der Verbindung der Formel (8) eine hydrolysierfähige Gruppe darstellten, jeweils für eine Hydroxygruppe stehen.

Die Ausgangsverbindungen der allgemeinen Formel (6) sind als faserreaktive Farbstoffe zahlreich in der Literatur beschrieben oder können analog bekannten Verfahrensweisen in sehr einfacher Weise aus den entsprechenden Ausgangskomponenten synthetisiert werden. So kann die Synthese der Ausgangs-Azofarbstoffe der Formel (6) durch übliche Diazotierungs- und Kupplungsreaktionen entsprechender Diazo- und Kupplungskomponenten erfolgen, die beispielsweise den obigen Formeln (11) und (12) entsprechen, wobei in den Formeln (12) jedoch der Rest Z durch den Ausgangsrest der Formel (7a) oder (7b) oder durch einen Rest der allgemeinen Formel (7c) oder durch eine Aminogruppe -N(R')H , die noch mit der entsprechenden Halogentriazin-Verbindung zum Aminorest der Formel (7c) umgesetzt wird, ersetzt ist.

Solche diazotierbaren Ausgangsamine, die zur Synthese der Ausgangs-Azofarbstoffe der Formel (6) dienen können, sind beispielsweise 2-(β-Sulfatoethylsulfonyl)-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5- oder -4-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder 5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 5-(β-Sulfatoethylsulfonyl)-2-amino-naphthalin, 6- oder 7- oder 8-(β-Sulfatoethylsulfonyl-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin, 3- oder 4-{β-[4-(β'-Sulfatoethylsulfonyl)-phen]-ethylamino}-anilin, 3- oder 4-{β-[2-Sulfo-4-(β'-sulfatoethylsulfonyl)-phen]-ethylamino}-anilin, 3- oder 4-[β-(β'-Chlorethylsulfonyl)-ethylamino]-anilin, 3- oder 4-[β-(β'-Sulfatoethylsulfonyl)-ethylamino]-anilin, 3- oder 4-[β-(Vinylsulfonyl)-ethylamino]-anilin, 3- oder 4-[γ-(β'-Chlorethylsulfonyl)-propylamino]-anilin, 3- oder 4-{N-[γ-(β'-Sulfatoethylsulfonyl)-propylamidocarbonyl]}-anilin, 3- oder 4-[γ-(β'-Sulfatoethylsulfonyl)-propylamino]-anilin, 3- oder 4-[γ-(Vinylsulfonyl)-propylamino]-anilin und 4-[1'-Methyl-1-(β-sulfatoethylsulfonyl)-ethylamino]-anilin, und entsprechende Phenylen- und Naphthylen-diamino-Ausgangsverbindungen mit der zweiten Aminogruppe sind beispielsweise 1,4-Phenylen-diamin, 1,4-Phenylendiamin-2-sulfonsäure, 1,4-Phenylendiamin-2-carbonsäure- 1,4-Diamino-naphthalin-2-sulfonsäure, 2,6-Diamino-naphthalin-8-sulfonsäure, 2,6-Diamino-naphthalin-4,8-disulfonsäure, 1,3-Phenylendiamin, 1,3-Phenylendiamin-4-sulfonsäure, 1,3-Phenylen-diamin-4,6-disulfonsäure, 1,4-Phenylendiamin-2,6-disulfonsäure, 1,4-Phenylendiamin-2,5-disulfonsäure und 1,4-Diamino-naphthalin-6-sulfonsäure.

Ausgangsverbindungen entsprechend der allgemeinen Formel H-E-NH₂ sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Aminonaphthalin-6-sulfonsäure, 1-Aminonaphthalin-7-sulfonsäure, 2-Sulfo-5-acerylamino-anilin, 2-Amino-5-naphthol-7-sulfonsäure, 2-Amino-8-naphthol-6-sulfonsäure, 2-(4'-Amino-benzoylamino)-5-naphthol-7-sulfonsäure, 1-(4'-Amino-2-sulfo-phenyl)-3-methyl- oder -3-carboxy-5-pyrazolon und N-Acetoacetyl-(3-sulfo-4-amino)-anilid. Ausgangs-Kupplungskomponenten für die Ausgangs-Azofarbstoffe der Formel (6), die einen Rest der allgemeinen Formel (7a) oder (7b) enthalten, sind beispielsweise:
1-[4'-(β-Sulfatoethylsulfonyl)-phenyl]-3-methyl-5-pyrazolon, 1-[4'-(Vinyl-sulfonyl)-phenyl]-3-methyl-5-pyrazolon, 1-[4'-(β-Sulfatoethylsulfonyl)-phenyl]-3-carboxy-5-pyrazolon, 1-[3'-[β-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]-6-sulfo-8-naphthol, 3-[3'-(β-Chlorethylsulfonyl)-benzoylamino]-6-sulfo-8-naphthol, 3-[3'-(Vinylsulfonyl)-benzoyl-amino]-6-sulfo-8-naphthol, 6-Sulfo-1-[3'-(β-chlorethylsulfonyl)-benzoylamino]-naphthol, 7-Sulfo-[3'-(vinylsulfonyl)-benzoylamino]-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonyl-phenyl)-ureido]-3,6-disulfo-8-naphthol, 1-[N'-(3'-Vinylsulfonyl-propyl)-ureido]-3,6-disulfo-8-naphthol, 1-[N'-(3'-β-Chlor-ethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(3'-β-Chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-Chlorethylsulfonyl-propyl)-ureido]-6-sulfo-8-naphthol, 3-[N'-(3'-β-Chlorethylsulfonyl-phenyl)-ureido]-6-sulfo-8-naphthol, 3-[N'-(3'-Vinylsulfonyl-propyl)-ureido]-6-sulfo-8-naphthol, 2-Sulfo-5-[N'-(3''-β-chlorethylsulfonyl-phenyl)-ureido]-anilin, 3-[N'-(3"-β-Sulfatoethylsulfonyl-phenyl)-ureido]-anilin und 6-Sulfo-1-[N'-(3''-β-Sulfatoethylsulfonyl-phenyl)-ureido]-8-naphthol.

Aminogruppenhaltige Kupplungskomponenten, die der allgemeinen Formel H-K-N(R')H entsprechen und die zum Aufbau der Ausgangs-Azofarbstoffe der Formel (6) mit anschließender Umsetzung eines Halogentriazins zur Einführung eines Restes der allgemeinen Formel (7c) dienen können, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6-sulfonsäure, 1-Amino-naphthalin-7-sulfonsäure, 4-Sulfo-1,3-diamino-benzol, 6-Sulfo-2-methoxy-1-amino-naphthalin, 5,7-Disulfo-2-aminonaphthalin, 1-Amino-8-hydroxy-naphthaln-4-sulfonsäure, 1-Amino-8-hydroxynaphthalin-6-sulfonsäure, 1-Amino-8-hydroxynaphthaln-2,4-disulfonsäure, 1-Amino-8-naphthol-3,6-disulfonsäure, 1-Amino-8-hydroxy-4,6-disulfonsäure, 1-Amino-8-hydroxy-naphthalin-2,4,6-trisulfonsäure, 2-(Methylamino)- und 2-(Ethylamino)-5-hydroxynaphthalin-7-sulfonsäure, 2-Amino-5-hydroxynaphthalin-1,7-disulfonsäure, 2-(Methylamino)- und 2-(Ethylamino)-8-hydroxynaphthalin-6-sulfonsäure, 2-Amino-8-hydroxynaphthalin-3,6-disulfonsäure, 2-(4'-Amino-3'-sulfophenylamino)-5-hydroxynaphthalin-7-sulfonsäure, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-(β-Aminoethyl)-3-cyano-4-methyl-6-hydroxy-pyrid-2-on, 1-(γ-Aminopropyl)-3-sulfomethyl-4-methyl-6-hydroxy-pyrid-2-on, 1,3-Diaminobenzol, 3-[N,N-Di-(β-hydroxyethyl)-amino]-anilin, 3-[N,N-Di-(β-sulfatoethyl)-amino]-4-methoxy-anilin, 3-(Sulfo-benzylamino)-anilin, 3-(Sulfobenzoylamino)-4-chlor-anilin und 3-[N,N-Di-(sulfobenzyl)-amino]-anilin, 2-Sulfo-5-acetylamino-anilin, 2-Amino-5-naphthol-7-sulfonsäure, 2-Amino-8-naphthol-6-sulfonsäure, 1-(4'-Aminobenzoyl)-amino-8-hydroxynaphthalin-3,6-disulfonsäure, 1-(4'-Aminobenzoyl)-amino-8-hydroxynaphthalin-4,6-disulfonsäure, 1-(3'-Aminobenzyl)-amino-8-hydroxynaphthalin-3,6-disulfonsäure, 1-(3'-Aminobenzoyl)-amino-8-hydroxynaphthalin-4,6-disulfonsäure, 1-(2'-Aminobenzoyl)-amino-8-hydroxy-naphthalin-3,6-disulfonsäure, 1-(2'-Aminobenzoyl)-amino-8-hydroxynaphthalin-4,6-disulfonsäure, 2-(3'-Aminobenzoyl)-amino-5-hydroxy-naphthalin-7-sulfonsäure, 2-(2'-Aminobenzoyl)-amino-5-hydroxy-naphthalin-7-sulfonsäure, 2-(4'-Aminobenzoyl)-amino-8-hydroxynaphthalin-6-sulfonsäure, 2-(3'-Aminobenzoyl)-amino-8-hydroxynaphthalin-6-sulfonsäure, 2-(2'-Aminobenzoyl)-amino-8-hydroxynaphthalin-6-sulfonsäure, 2-(4'-Aminobenzoyl)-amino-5-naphthol-7-sulfonsäure, 1-(4'-Amino- oder 1-(4'-Acetylamino-2-sulfophenyl)-3-methyl- oder -3-carboxy-5-pyrazolon, N-(3-Sulfo-4-amino)-acetoacetyl-anilid, 1-Amino-8-naphthol-3,6-oder -4,6-disulfonsäure, 1-(3'-Aminobenzoyl)- oder 1-(4'-Aminobenzoyl)-amino-8-naphthol-3,6- oder -4,6-disulfonsäure, 1-Acetylamino-8-naphthol-3,6- oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methyl-amino)-8-naphthol-6-sulfonsäure, 1-(3'-Amino- oder 1-(3'-Acetylamino-6'-sulfophenyl)-3-methyl- oder -3-carboxy-5-pyrazolon, 2-(N-Methyl-N-acetylamino)- oder 2-Methylamino-5-naphthol-7-sulfonsäure, N-Methyl-anilin und N-Propyl-m-toluidin.

Bivalente Kupplungskomponenten, die zum Aufbau von Ausgangs-Disazofarbstoffen der Formel (6) dienen, in welchen der bivalente Kupplungsrest mit zwei Diazokomponenten verbunden ist, wie beispielsweise zur Synthese erfindungsgemäßer Disazoverbindungen entsprechend den allgemeinen Formeln (10d) (10e) und (10g), sind beispielsweise Resorcin, 1,3-Diaminobenzol, 5,5'-Dihydroxy-7,7'-disulfo-2,2'-dinaphthyl-harnstoff, 1,8-Dihydroxy-3,6-disulfo-naphthalin und insbesondere 1-Amino-8-naphthol-3,6-disulfonsäure und 1-Amino-8-naphthol-4,6-disulfonsäure.

Die zur Synthese der erfindungsgemäßen Farbstoffe der allgemeinen Formel (1) verwendeten Silanverbindungen der allgemeinen Formel (8) sind zahlreich in der Literatur beschrieben und teilweise im Handel erhältlich. Als Species nicht bekannte Silanverbindungen können analog den Verfahrensweisen der Herstellung der bekannten Silanverbindungen, wie beispielsweise analog den Angaben der deutschen Patentschrift Nr. 1 186 061, synthetisiert werden. So geht man insbesondere von Silan-Ausgangsverbindungen aus, die ein an ein aliphatisches oder aromatisches Kohlenstoffatom eines Substituenten am Siliciumatom gebundenes Halogenatom besitzen, das mit einem Alkalimetall-alkoholat eines entsprechenden Aminoalkohols in einem polaren, organischen, gegebenenfalls mit Wasser mischbaren Lösemittel, das gegenüber den Reaktanten, wie insbesondere Alkoholaten, inert ist, bei einer Temperatur zwischen 0 und 50°C, vorzugsweise zwischen 10 und 40°C, umgesetzt wird. Hierbei wird das entsprechende Alkalihalogenid frei und fällt als kristallines Salz aus. Es wird nach der Umsetzung abgetrennt, beispielsweise durch Filtration, und aus dem hiervon befreiten Ansatz wird mittels fraktionierter Destillation das Lösemittel entfernt und die synthetisierte Silanverbindung gewonnen.

Die hierbei verwendeten Alkalimetall-Aminoalkoholate werden in üblicher Weise hergestellt, indem man von der entsprechenden Hydroxyverbindung (Aminoalkohol) ausgeht und diesen mit dem metallischen Alkalimetall, wie Natrium und insbesondere Kalium, in an und für sich bekannter Verfahrensweise in den oben erwähnten Lösemitteln umsetzt. In der Regel erfolgt die Umsetzung bei einer Temperatur zwischen 50 und 150°C, vorzugsweise zwischen 80 und 110°C. Vorteilhaft wählt man als Lösemittel ein solches mit genügend hohem Siedepunkt, damit das Alkalimetall über seinen Schmelzpunkt erwärmt werden kann, um die Reaktionsführung zu vereinfachen und zu beschleunigen.

Hierfür geeignete Lösemittel sind insbesondere aliphatische Kohlenwasserstoffe mit einem Siedebereich von 70 bis 150° C, wie beispielsweise Heptan und Dodecan, und Gemische derselben, des weiteren aromatische Kohlenwasserstoffe, wie beispielsweise alkylsubstituierte Benzole und Naphthaline, wie insbesondere Toluol und Xylol, und desweiteren aliphatische, insbesondere cycloaliphatische, Etherverbindungen, wie beispielsweise Tetrahydrofuran.

Ausgangs-Silanverbindungen der allgemeinen Formel (8) sind beispielsweise [γ-(β'-Amino-ethoxy)-propyl]-trimethoxy-silan, [γ-(β'-Aminoethyl-amino)-propyl]-trimethoxy-silan, [γ-(β'-Aminoethoxy)-propyl]-methyl-diethoxy-silan, [γ-(β'-Aminoethyl-amino)-propyl]-methyl-dimethoxy-silan, 3- oder 4-Aminophenyl-trimethoxy-silan, [γ-(4-Aminophenoxy)-propyl]-trimethoxy-silan, N-[γ-(Trimethoxy-silyl)-propyl]-N,N-di-(β'-aminoethyl)-amin, (γ-Aminopropyl)-trimethoxy-silan, (γ-Aminopropyl)-ethoxy-dimethyl-silan, (γ-Aminopropyl)-methyl-diethoxy-silan, N,N-Bis-[γ-(triethoxy-silyl)-propyl]-amin, [γ-(N,N-Dimethylamino)-propyl]-trimethoxy-silan, [γ-(N-Methylamino)-propyl]-trimethoxy-silan, (δ-Aminobutyl)-trimethoxy-silan, {4-[N-(β-Aminoethyl)-amino]-methyl}-phenethyl-trimethoxy-silan, [(N-Cyclohexyl-amino)-methyl]-methyl-diethoxy-silan, [γ-(N-N-Diethyl-amino)-propyl]-trimethoxy-silan, [γ-(β'-N-Methylamino-ethoxy)-propyl]-methyl-diethoxy-silan, [γ-(β'-N-Methylamino-ethoxy)-propyl]-triethoxy-silan, [γ-(β'-N-Methylamino-ethoxy)-propyl]-dimethyl-ethoxy-silan, 1-{3'-[β-(N-Methylamino)-ethoxy-methyl]-phenyl}-eth-1-yl-(diethoxy)-(methyl)-silan, 1-{4'-[β-(N-Methylamino)-ethoxy-methyl]-phenyl}-eth-2-yl-(diethoxy)-(methyl)-silan, 1-{4'-[β-(N-Methylamino)-ethoxy-methyl]-phenyl}-eth-1-yl-(diethoxy)-(methyl)-silan, 1-{3'-[β-(N-Methylamino)-ethoxy-methyl]-phenyl}-eth-2-yl-(diethoxy)-(methyl)-silan und {γ-[β'-(β''-Aminoethyl-amino)-ethyl]-propyl}-trimethoxy-silan.

Die Abscheidung und Isolierung der erfindungsgemäß hergestellten Farbstoffe der allgemeinen Formel (1) aus den Syntheselösungen kann nach allgemein bekannten Methoden erfolgen, so beispielsweise durch Ausfällen aus dem Reaktionsmedium mittels einem Elektrolyt, wie Natriumchlorid oder Kaliumchlorid, oder durch Eindampfen der Reaktionslösung oder Sprühtrocknung, wobei der Syntheselösung eine Puffersubstanz zugefügt werden kann.

Die erfindungsgemäßen Farbstoffe der allgemeinen Formel (1) - im nachfolgenden als Farbstoffe (1) bezeichnet - besitzen wertvolle Farbstoffeigenschaften. Sie können zum Färben (einschließlich Bedrucken) von Fasermaterialien aller Art, die Hydroxy-, Amino-, Carbonamid-, Carbonsäureester-, Carboxy- oder Thiolgruppen enthalten, verwendet werden. Bevorzugt werden die jedoch in Form der aus der Synthese direkt erhältlichen Lösungen, gegebenenfalls nach Zusatz einer Puffersubstanz und gegebenenfalls nach Konzentrierung, direkt der färberischen Verwendung zugeführt.

Die erfindungsgemäßen Farbstoffe (1) haben bei der färberischen Anwendung den großen Vorteil, daß sie in den Färbe- und Druckverfahren ohne die ansonsten bei den üblichen Färbe- und Druckverfahren des Standes der Technik für faserreaktive Farbstoffe erforderlichen Zusätze an Elektrolytsalzen und Alkali, welche nicht mehr erforderlich sind, eingesetzt werden können. Mit den Farbstoffen (1) kann deshalb mit erheblichen technischen Vorteil gemäß den üblichen Färbe- und Druckverfahren (sofern diese es erlauben, die Fixierung der Farbstoffe (1) auf dem Fasermaterial bei einer Temperatur von oberhalb 100°C durchzuführen), jedoch gänzlich ohne ein alkalisch wirkendes Mittel und gänzlich ohne die Verwendung von Elektrolytsalzen, wie Natriumchlorid und Natriumsulfat, oder gegebenenfalls nur mit einer äußerst geringen Menge an einem Elektrolytsalz, wie unterhalb von 5 g/l Färbeflotte (Druckpaste), gefärbt werden.

Textile Fasermaterialien werden deshalb erfindungsgemäß mit den Farbstoffen (1) analog den bekannten Färbeweisen und Druckverfahren zum Färben bzw. Bedrucken von Fasermaterialien mit wasserlöslichen textilen Farbstoffen unter Anwendung der hierfür üblichen Farbstoffmengen gefärbt, jedoch mit der erfindungsgemäßen Ausnahme, daß die Färbebäder, Klotzflotten und Druckpasten mit den Farbstoffen (1) keine alkalisch wirkenden Verbindungen, wie sie üblicherweise zur Fixierung von faserreaktiven Farbstoffen benutzt werden, wie beispielsweise Natriumcarbonat, Kaliumcarbonat, Natronlauge und Wasserglas, enthalten und ebenso keine der üblichen Elektrolytsalzen, die insbesondere die Migration des Farbstoffes auf der Faser erhöhen sollen, enthalten oder diese nur in einer äußerst geringen Menge von bis zu höchstens 5 g/l Färbebad und Färbeflotte enthalten, und daß der erfindungsgemäße Färbeprozeß bei einer Temperatur oberhalb von 100°C, wie bei einer Temperatur zwischen 100 und 180°C, bevorzugt zwischen 110 und 150°C, und innerhalb eines pH-Bereiches von 4,5 bis 7, vorzugsweise von 5 bis 6, durchgeführt wird.

Färbeverfahren, die erfindungsgemäß zur Applikation und Fixierung der Farbstoffe (1) auf dem textilen Fasermaterial eingesetzt werden können, sind beispielsweise die verschiedenen Ausziehverfahren bei einer Temperatur von oberhalb 95°C, insbesondere oberhalb 100°C, wie das Färben auf dem Jigger oder auf der Haspelkufe oder das Färben aus langer oder kurzer Flotte, jeweils in einer geschlossenen Apparatur und erforderlichenfalls unter Druck, das Färben in Jet-Färbemaschinen und das Färben nach einem Imprägnierverfahren mit anschließender Fixierung des Farbstoffes auf dem imprägnierten Material oberhalb 95°C, wie beispielsweise mittels Heißdampf oder heißer Luft gemäß den üblichen Thermofixierverfahren. Die Imprägnierung des Fasermaterials mit der Lösung des Farbstoffes kann in üblicher Weise erfolgen, so durch Foulardieren (Klotzen) mit einer Flottenaufnahme zwischen 70 und 120 Gew.-%, vorzugsweise zwischen 70 und 100 Gew.-%, bezogen auf das Gewicht des Fasermaterials, durch Pflatschen oder durch Aufsprühen. Wird die Farbstofflösung auf das Fasermaterial durch Aufsprühen aufgebracht, so wird die Flüssigkeitsaufnahme in der Regel zwischen 30 und 70 Gew.-% gewählt.

Es ist weiterhin bei der erfindungsgemäßen Verwendung der Farbstoffe (1) zum Färben von Fasermaterialien nicht erforderlich, die üblichen Hilfsmittel, wie insbesondere Harnstoff, in die Färbeflotten und Druckpasten einzusetzen. Sofern ein Einsatz solcher Hilfsmittel dennoch für erforderlich gehalten wird, so genügen hierzu im Vergleich zum Stand der Technik nur sehr geringe Mengen, nämlich nur eine höchstens 20 %ige Menge derjenigen Menge, deren Einsatz bei den Verfahren des Standes der Technik in der Regel erforderlich ist.

Eine Nachbehandlung der erfindungsgemäß erhältlichen Färbungen mit den Farbstoffen (1) ist in der Regel nicht erforderlich. Es genügt das zwei- oder mehrmalige Spülen mit kaltem und heißem Wasser, dem gegebenenfalls ein übliches nicht-ionogenes Tensid zugesetzt werden kann. Auf eine Kochendbehandlung des gefärbten Substrates mit einer Waschlösung zur Verbesserung der Echtheitseigenschaften kann verzichtet werden.

Die erfindungsgemäßen Farbstoffe (1) zeichnen sich durch guten Farbaufbau und hohe Farbstärke aus; sie liefern Färbungen und Drucke mit hoher Farbstärke und guten Echtheitseigenschaften.

Fasermaterialien, die mit den Farbstoffen (1) gefärbt werden können, sind solche natürlichen und synthetischen Ursprungs, wie beispielsweise natürliche, regenerierte und synthetische Cellulosefasermaterialien, natürliche und synthetische Polyamidfasermaterialien, Fasermaterialien aus Polyurethanen, Polyestern und gegebenenfalls sauermodifizierten Polyacrylen. Native Cellulosefasermaterialien sind beispielsweise Hanf, Leinen, Jute und insbesondere Baumwolle; regenerierte Cellulosefasermaterialien sind beispielsweise Zellwolle und Viskose. Synthetische Polyamidfasermaterialien sind solche aus Polyamid-4, Polyamid-11 und Polyamid-6,6. Natürliche Polyamidfasermaterialien sind Wolle und andere Tierhaare sowie Seide. Die Fasermaterialien können in allen üblichen Verarbeitungszustanden gefärbt werden, so als Garn, Flocke, Kammzug und Stückware (Gewebe), sowie in Form von Mischfasermaterialien, wie beispielsweise Baumwolle/Polyester-Fasermaterialien, wie Mischgeweben.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Natrium-, Kalium- und Lithiumsalze, hergestellt und isoliert und in Form ihrer Salze zum Färben verwendet. Ebenso können die in den Beispielen in Form der freien Säure genannten Ausgangsverbindungen und Komponenten als solche oder in Form ihrer Salze, vorzugsweise Alkalimetallsalze, in die Synthese eingesetzt werden.
Die Absorptionsmaxima (λₘₐₓ-Werte) wurden in wäßriger Lösung anhand der Alkalimetallsalze bestimmt.

### Beispiel A

67,9 Teile N-Methylamino-ethanol gibt man langsam zu 35,2 Teilen Kalium in 1000 Vol.-Teilen Tetrahydrofuran, wobei man die exotherme Reaktion durch Außenkühlung auf einer Temperatur zwischen 30 und 40°C hält. Anschließend erhitzt man den Ansatz am Rückfluß bis zur vollständigen Umsetzung des Kaliums (etwa 5 Stunden). Danach kühlt man den Ansatz auf etwa 20°C ab und gibt 190,3 Teile γ-Chlorpropyl-(methyl)-(diethoxy)-silan hinzu, wobei man die Reaktionstemperatur erforderlichenfalls unter 40°C durch Außenkühlung hält. Nach erfolgter Umsetzung wird das ausgefallene Kaliumchlorid abfiltriert und das Filtrat durch Destillation von Tetrahydrofuran befreit. Das Produkt wird danach einer Vakuumdestillation unterworfen. Die erfindungsgemäße Verbindung [γ-(β'-N-Methylamino-ethoxy)-propyl]-methyl-diethoxy-silan der Formel 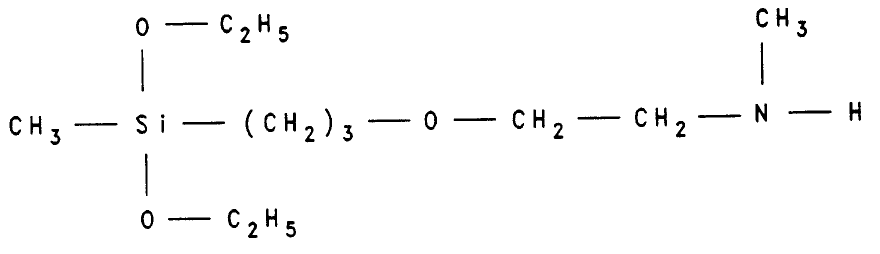
wird in einem Siedebereich zwischen 95 und 120°C bei 5·10⁻² mbar abgetrennt. Die Struktur ist durch ¹H-NMR-Analyse gesichert.

### Beispiel B

Man verfährt gemäß der Verfahrensweise des Beispieles A, setzt jedoch anstelle der γ-Chlorpropyl-methyl-diethoxy-silan-Verbindung die äquivalente Menge an γ-Chlorpropyl-triethoxy-silan ein. Man gewinnt das erfindungsgemäße [γ-(β'-N-Methylamino-ethoxy)-propyl]-triethoxy-silan der Formel 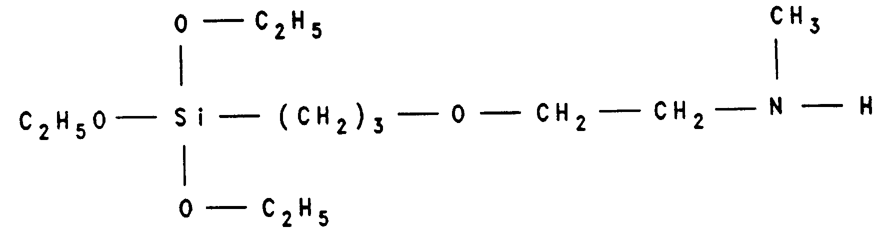
durch fraktionierte Destillation bei einem Siedebereich zwischen 104 und 118°C bei 5·10⁻² mbar.

### Beispiel C

Man verfährt gemäß der Verfahrensweise des Beispieles A, setzt jedoch anstelle der γ-Chlorpropyl-methyl-diethoxy-silan-Verbindung die äquivalente Menge an (γ-Chlorpropyl)-(dimethyl)-(ethoxy)-silan ein. Man gewinnt die erfindungsgemäße Verbindung [γ-(β'-N-Methylamino-ethoxy)-propyl]-(dimethyl)-(ethoxy)-silan der Formel 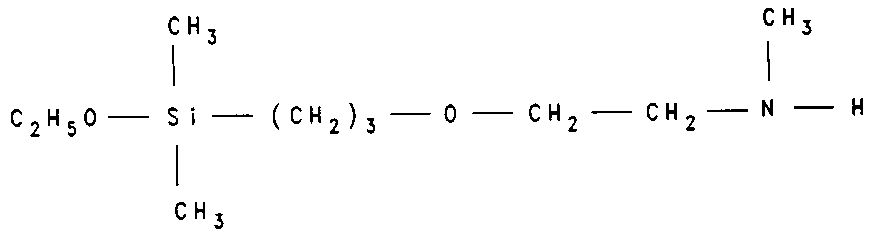
durch fraktionierte Destillation bei einem Siedebereich zwischen 90 und 105°C bei 5·10⁻² mbar.

### Beispiel D

36,7 Teile N-Methylamino-ethanol gibt man langsam zu 20,1 Teilen Kalium in 700 Vol.-Teilen Tetrahydrofuran, wobei man die exotherme Reaktion durch Außenkühlung auf einer Temperatur zwischen 30 und 40°C hält. Anschließend erhitzt man den Ansatz am Rückfluß bis zur vollständigen Umsetzung des Kaliums (etwa 5 Stunden) und gibt danach bei einer Temperatur zwischen 20 und 35°C 147,7 Teile eines Gemisches (im Verhältnis der meta-/para-Isomeren von etwa 70:30) von 1 - und 2-[3'- und 4'-Chlormethyl-phenyl)-ethyl]-methyl-diethoxy-silan hinzu. Nach erfolgter Umsetzung wird das ausgefallene Kaliumchlorid abfiltriert und das Filtrat durch Destillation von Tetrahydrofuran befreit. Das Produkt wird danach einer Vakuumdestillation unterworfen. Die als Gemisch erhaltenen erfindungsgemäßen Verbindungen, die den Formeln 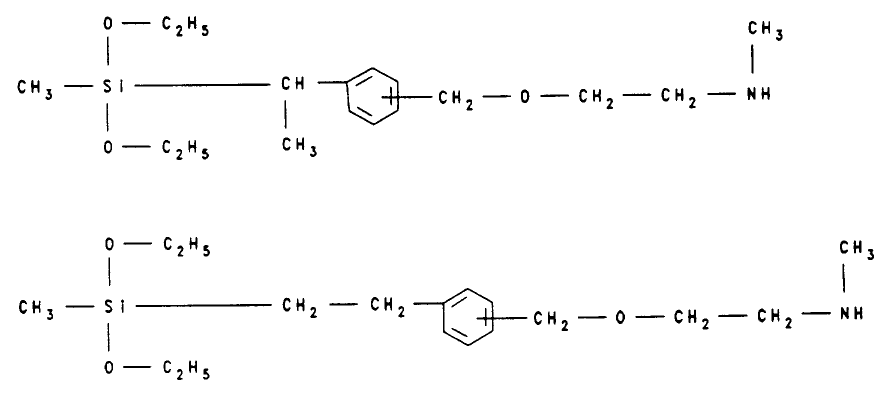
entsprechen, werden in einem Siedebereich zwischen 165°C und 200°C/10 mbar abgetrennt, wobei sich für die vier einzelnen Verbindungen folgende Fraktionen ergeben:
1-{3'-[β-(N-Methylamino)-ethoxy-methyl]-phenyl}-eth-1-yl-(diethoxy)-(methyl)-silan: Kdp.: 165°C/10 mbar ;
1-{4'-[β-(N-Methylamino)-ethoxy-methyl]-phenyl}-eth-1-yl-(diethoxy)-(methyl)-silan: Kdp.: 174°C/10 mbar ;
1-{3'-[β-(N-Methylamino)-ethoxy-methyl]-phenyl}-eth-2-yl-(diethoxy)-(methyl)-silan: Kdp.: 185°C/10 mbar ;
1-{4'-[β-(N-Methylamino)-ethoxy-methyl]-phenyl}-eth-2-yl-(diethoxy)-(methyl)-silan: Kdp.: 197°C/10 mbar.

### Beispiel 1

Zu 215 Teilen einer wäßrigen Lösung von 15 Teilen des Natriumsalzes des aus Beispiel 1 der europäischen Patentschrift Nr. 0 032 187 bekannten Azofarbstoffes, der nach einem üblichen Dialyseverfahren von Elektrolysalzen, wie Natriumchlorid und Natriumsulfat, im wesentlichen befreit wurde, werden 8,66 Teile [γ-(β'-Aminoethoxy)-propyl]-methyl-diethoxy-silan gegeben. Der Reaktionsansatz wird bei 20°C noch während etwa 12 Stunden weitergerührt. Der erfindungsgemäße Azofarbstoff der Formel (in Form der freien Säure geschrieben) 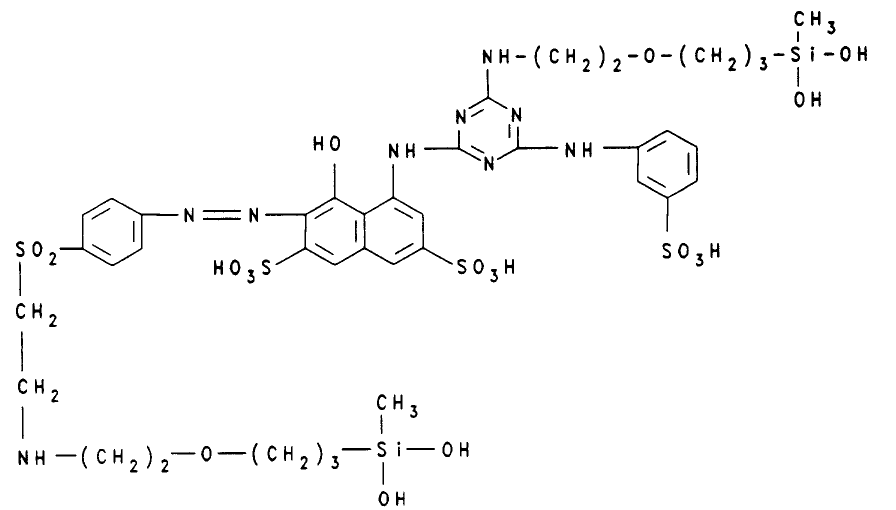
kann in üblicher Weise, bspw. durch Sprühtrocknung, aus der Syntheselösung isoliert werden. Vorteilhaft jedoch kann diese Farbstofflösung selbst, gegebenenfalls nach Aufkonzentrieren, direkt der färberischen Verwendung zugeführt werden, indem man beispielsweise mit dieser Lösung ein mercerisiertes Baumwollgewebe bei einer Temperatur zwischen 20 und 30°C mit einer Flottenaufnahme von 70 %, bezogen auf das Gewicht des Gewebes, imprägniert und das geklotzte Gewebe einer fünfminütigen Heißluftbehandlung von 130°C unterwirft. Danach wird die erhaltene Färbung mit kaltem und heißem Wasser, dem ein herkömmliches nichtionogenes Netzmittel zugesetzt werden kann, gewaschen.

Es wird eine farbstarke, gleichmäßig gefärbte rote Färbung mit guten Gebrauchsechtheiten erhalten.

### Beispiel 2

28 Teile des elektrolytsalzfreien Farbstoffes von Beispiel 1 der europäischen Patentschrift Nr. 0 032 187 werden in einer Mischung aus 400 Teilen Methanol und 100 Teilen Dimethylsulfoxid gelöst und mit 10,3 Teilen [γ-(β'-Aminoethoxy)-propyl]-triethoxy-silan versetzt. Man rührt den Ansatz noch fünf Stunden bei etwa 20°C weiter und erwärmt ihn anschließend für 30 Minuten auf 40°C.

Die Lösung enthält den erfindungsgemäßen Azofarbstoff der Formel (in Form der freien Säure geschrieben) 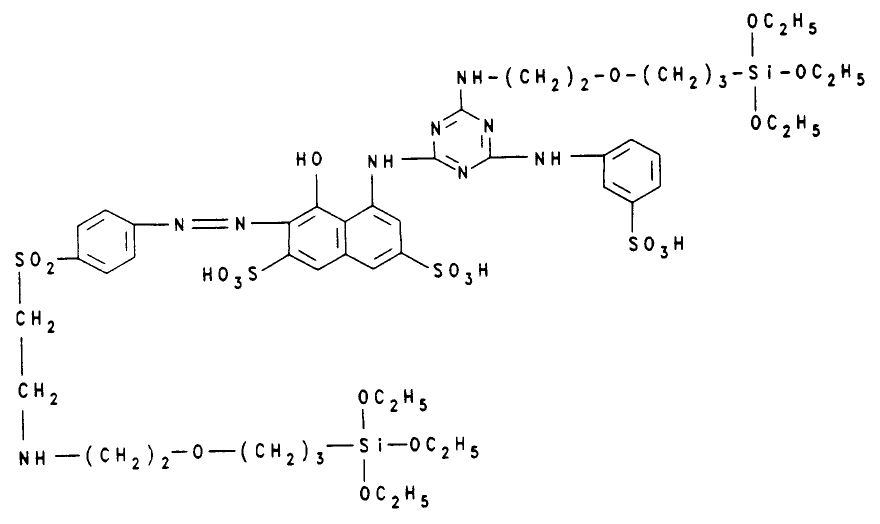
der gute färberische Eigenschaften aufweist. Die Lösung dieses Farbstoffes kann direkt oder nach Verdünnen mit Wasser als Färbeflotte eingesetzt werden, indem man ein Gewebe aus mercerisierter ungebleichter Baumwolle bei 25 bis 30°C mit dieser Färbeflotte mit einer Flottenaufnahme von 80 % imprägniert und anschließend das imprägnierte Gewebe einer fünfminütigen Heißluftbehandlung von 130°C unterwirft. Die erhaltene Färbung wird anschließend gründlich mit kaltem und heißem Wasser, dem ein handelsübliches Netzmittel zugesetzt sein kann, gespült. Es wird eine farbstarke, gleichmäßige rote Färbung mit guten Echtheiten erhalten.

### Beispiel 3

Zu einer Lösung von 10 Teilen des Natriumsalzes des aus Beispiel 1 der europäischen Patentschrift-Nr. 0 063 276 bekannten Farbstoffes, dem nach üblichen Dialyseverfahren die Begleit-Elektrolytsalze entzogen wurden, in 200 Teilen Wasser werden 8 Teile [γ-(β'-Aminoethylamino)-propyl]-trimethoxysilan gegeben. Die Umsetzung erfolgt bei etwa 20°C während 12 Stunden.

Der erhaltene erfindungsgemäße Azofarbstoff, der, in Form der freien Säure geschrieben, die folgende Konstitution 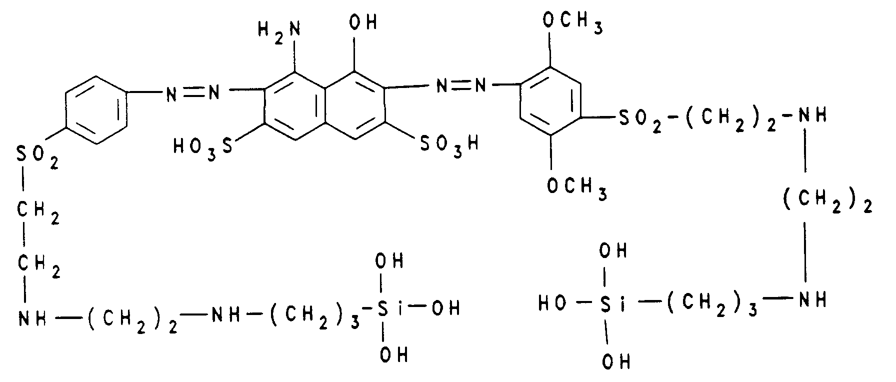
besitzt, kann auf üblichem Wege, beispielsweise durch Aussalzen mit einem Elektrolytsalz, wie Natriumchlorid, bevorzugt jedoch durch Eindampfen oder Sprühtrocknung, isoliert werden. Vorzugsweise findet er in Form der elektrolytfreien wäßrigen Lösung zum Färben von Fasermaterialien Verwendung. Beispielsweise kann mit der aus dem Syntheseansatz erhaltenen Farbstofflösung ein mercerisiertes und gebleichtes Baumwollgewebe mit einer Flottenaufnahme von 80% geklotzt und die geklotzte Ware anschließend einer fünfminütigen Heißluftbehandlung von 130°C unterworfen werden. Die erhaltene Färbung wird mit kaltem und heißem Wasser, dem ein handelsübliches Netzmittel zugesetzt werden kann, gut gewaschen. Es wird eine farbstarke, gleichmäßige blaue Färbung mit guten Echtheitseigenschaften erhalten.

### Beispiel 4

Eine Lösung von 10 Teilen des bekannten Farbstoffes der Formel 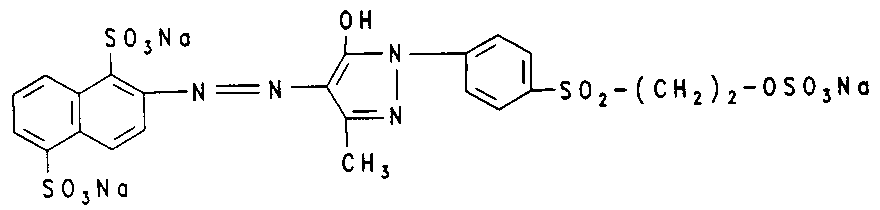
(der in üblicher Weise durch Kupplungsreaktion des Diazoniumsalzes von 2-Amino-naphthalin-1,5-disulfonsäure mit 1-(4'-β-sulfatoethylsulfonyl-phenyl)-3-methyl-pyrazol-5-on erhältlich ist und nach der Synthese gemäß üblichen Verfahrensweisen von synthesebedingten Elektrolytsalzen befreit wurde) in 200 Teilen Wasser wird bei 20 bis 25°C mit 4 Teilen [γ-(β'-Aminoethylamino)-propyl]-trimethoxy-silan versetzt; der Ansatz wird noch 12 Stunden bei dieser Temperatur weitergerührt. Der erhaltene erfindungsgemäße Farbstoff der Formel 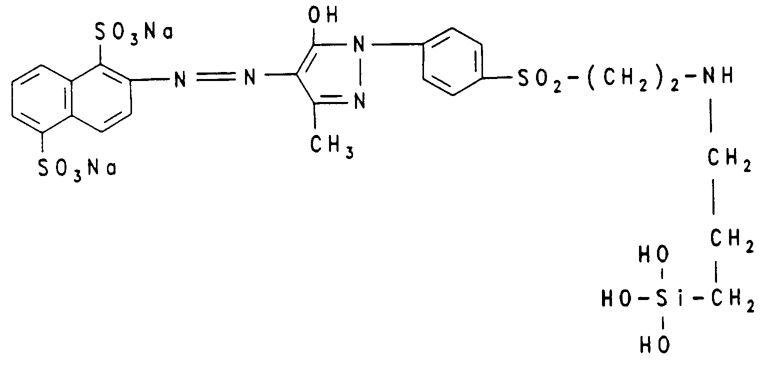
kann in üblicher Weise isoliert werden. Bevorzugt jedoch kann er in Form der erhaltenen salzfreien Syntheselösung der färberischen Verwendung zugeführt werden. Beispielsweise kann man mit dieser Lösung ein handelsübliches mercerisiertes Baumwollgewebe mit einer Flottenaufnahme von 80 %, bezogen auf das Gewicht des Gewebes, auf einem Foulard imprägnieren und das geklotzte Material einer 5-minütigen Heißluftbehandlung von 130°C aussetzen, während der die Fixierung des Farbstoffes auf der Faser erfolgt. Die erhaltene Färbung wird anschließend mit kaltem und heißem Wasser, dem ein handelsübliches nichtionogenes Tensid zugesetzt werden kann, gespült und getrocknet. Es wird eine farbstarke gelbe Färbung erhalten, die die gleichen guten Echtheitseigenschatten aufweist wie eine nach üblichen Färbeweisen für faserreaktive Farbstoffe erhaltene Färbung unter Verwendung des obengenannten bekannten β-Sulfatoethylsulfonyl-Azofarbstoffes.

### Beispiel 5

Zu 210 Teilen einer wäßrigen Lösung von 10 Teilen des bekannten Kupferphthalocyaninfarbstoffes der Formel 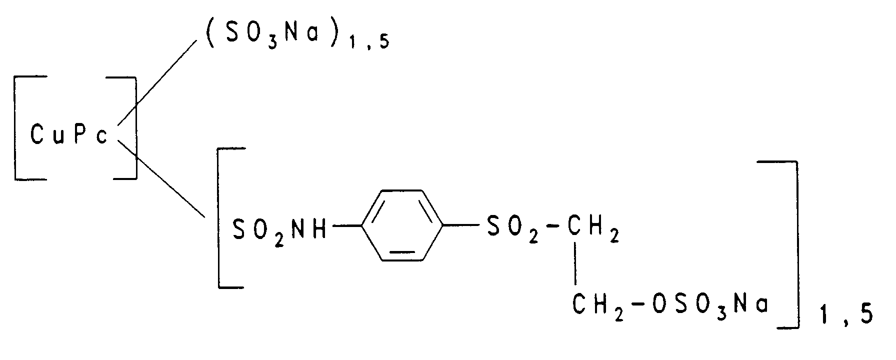
(der durch Umsetzung von Kupferphthalocyanin-trisulfochlorid mit 4-(β-Sulfatoethylsulfonyl)-anilin analog bekannten Verfahrensweisen erhältlich ist und der bzw. dessen wäßrige Lösung von synthesebedingten Elektrolytsalzen befreit wurde) wird mit 4 Teilen [γ-(β'-Aminoethylamino)-propyl]-trimethoxy-silan bei 20 bis 25°C versetzt und noch 12 Stunden bei dieser Temperatur weitergerührt. Der erhaltene erfindungsgemäße Kupferphthalocyaninfarbstoff der Formel 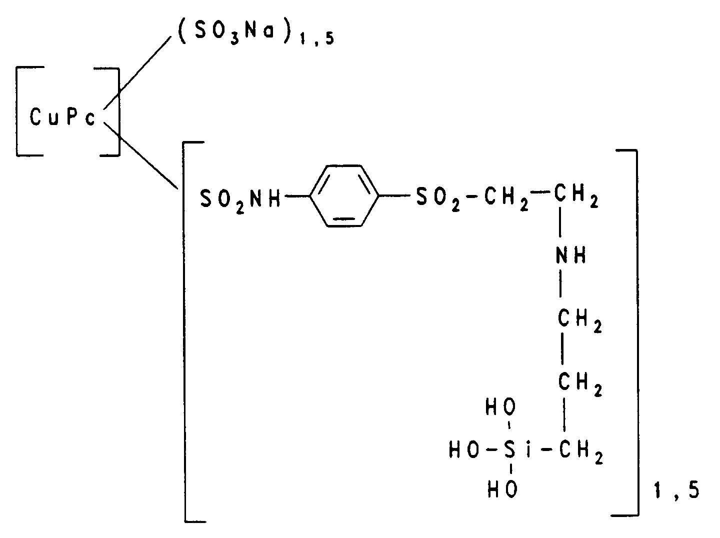
kann in üblicher Weise, beispielsweise durch Sprühtrocknung, isoliert werden. Er besitzt sehr gute Farbstoffeigenschaften. Um ein Fasermaterial zu färben, wird eine wäßrige Lösung dieses Farbstoffes (die bevorzugt auch die aus der Synthese erhältliche wäßrige Farbstofflösung sein kann) beispielsweise auf ein mercerisiertes Baumwollgewebe mit einer Flottenaufnahme von 80 %, bezogen auf das Warengewicht, aufgebracht, und das so imprägnierte Gewebe wird anschließend während 5 Minuten einer Heißluftbehandlung von 130°C ausgesetzt. Die erhaltene Färbung wird danach mit kaltem und mit warmem Wasser von 30 bis 35°C, das ein handelsübliches nicht-ionogenes Tensid enthalten kann, gespült, anschließend nochmals mit kaltem Wasser gespült und getrocknet. Es wird eine farbstarke, türkisfarbene, egale Färbung mit hohen Echtheitseigenschaften erhalten.

### Beispiel 6

Zu 210 Teilen einer salzfreien, wäßrigen Lösung von 10 Teilen des aus der deutschen Patentschrift Nr. 1 126 542 bekannten Kupferkomplex-Azofarbstoffes werden 4,5 Teile [γ-(β'-Aminoethylamino)-propyl]-trimethoxy-silan gegeben. Man rührt den Ansatz noch bei 20 bis 25°C während 12 Stunden nach.

Der erhaltene erfindungsgemäße Kupferkomplex-Monoazofarbstoff besitzt die Formel 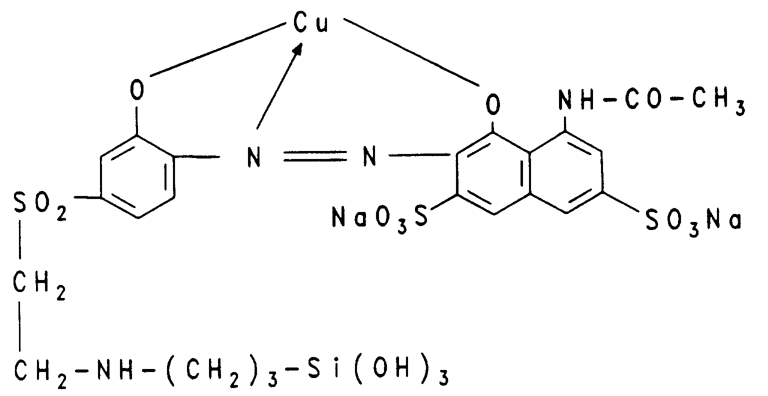
Er kann aus der Syntheselösung durch Eindampfen isoliert werden und besitzt gute Farbstoffeigenschaften. Zur Herstellung einer Färbung wird eine wäßrige Lösung dieses Farbstoffes (die bevorzugt die aus der Synthese erhaltene Farbstofflösung sein kann) auf ein mercerisiertes Baumwollgewebe mit einer Flottenaufnahme von 70 %, bezogen auf das Warengewicht, aufgebracht, beispielsweise durch Aufsprühen, Klotzen oder Pflatschen. Das so imprägnierte Gewebe wird anschließend einer 5-minütigen Heißluftbehandlung von 130°C ausgesetzt und danach, wie in den obigen Beispielen beschrieben, gründlich mit Wasser gewaschen. Es wird eine farbstarke, gleichmäßig gefärbte blaue Färbung mit guten Gebrauchsechtheiten erhalten.

## Patentansprüche

1. Farbstoffe der allgemeinen Formel (1)
F-(Z)ₛ (1)
in welcher bedeuten:
F ist der Rest eines sulfo- und/oder carboxygruppenhaltigen Farbstoffes;
s ist die Zahl 1, 2 oder 3, bevorzugt 1 oder 2;
Z ist eine Gruppe der allgemeinen Formel (2A) oder (2B) 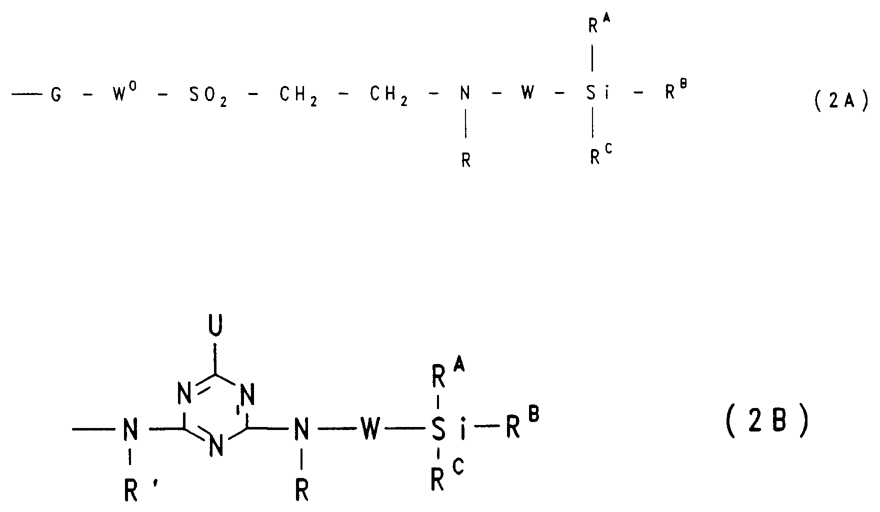
in welchen bedeuten:
R ist Wasserstoff oder Alkyl von 1 bis 4 C-Atomen, das durch Phenyl, Sulfophenyl, Sulfo, Carboxy, Sulfato oder Hydroxy substituiert sein kann;
R' ist Wasserstoff oder Alkyl von 1 bis 4 C-Atomen, das durch Phenyl, Sulfophenyl, Sulfo oder Carboxy substituiert sein kann;
G ist eine direkte Bindung oder eine Gruppe der Formel -NH-CO- , -CO-NH- , -NH-SO₂- , -SO₂-NH- oder -N(R⁰)- mit R⁰ gleich Wasserstoff oder Alkyl von 1 bis 4 C-Atomen, das durch Hydroxy, Phenyl, Sulfophenyl, Sulfo oder Carboxy substituiert sein kann;
W^{o} ist eine direkte Bindung oder eine Gruppe der allgemeinen Formel (3)
-(alk)ₓ-(arylen)_{y}-X-(alkylen)_{z}- (3)
in welcher
alk ein Alkylenrest von 1 bis 4 C-Atomen oder ein Rest der allgemeinen Formel -alk-O- mit alk der eben genannten Bedeutung ist,
arylen Phenylen ist, das durch 1 oder 2 Substituenten aus der Gruppe Methyl, Ethyl, Methoxy, Ethoxy, Sulfo und Carboxy substituiert sein kann,
alkylen Alkylen von 1 bis 6 C-Atomen ist, das durch 1 oder 2 Substituenten aus der Gruppe Hydroxy, Sulfo, Carboxy und Sulfato substituiert sein kann, oder Alkylen von 4 bis 8 C-Atomen ist, das durch 1 oder 2 Heterogruppen aus der Gruppe der Formeln -O- und -NH- unterbrochen ist,
x die Zahl Null oder 1 ist,
y die Zahl Null oder 1 ist,
z die Zahl Null oder 1 ist,
wobei die Summe von (x + z) für die Zahl Null oder 1 steht, und
X die Gruppe -O- oder -NH- bedeutet;
W ist eine Gruppe der allgemeinen Formel (4) 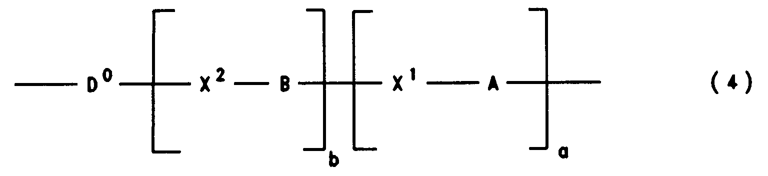 in welcher bedeuten:
a ist die Zahl Null oder 1;
b ist eine ganze Zahl von Null bis 10, vorzugsweise Null oder 1 bis 3;
A ist Alkylen von 1 bis 6 C-Atomen, das durch Hydroxy, Methoxy, Ethoxy, Sulfo, Sulfato oder Carboxy substituiert sein kann, oder ist Phenylen, das durch Methoxy, Ethoxy, Methyl, Ethyl, Sulfo und/oder Carboxy substituiert sein kann, oder ist Phenylen-alkylen, Alkylen-phenylen, Alkylen-phenylen-alkylen oder Phenylen-alkylen-phenylen, wobei die Alkylengruppen dieser Reste solche von 1 bis 6 C-Atomen sind und durch Hydroxy, Methoxy, Ethoxy, Sulfo, Sulfato oder Carboxy substituiert sein können, und die Phenylenreste durch Methoxy, Ethoxy, Methyl, Ethyl, Sulfo und/oder Carboxy substituiert sein können;
X¹ ist eine Gruppe der Formel -S- , -O- , -NH- oder -N(R'')- , in welcher R'' Alkyl von 1 bis 4 C-Atomen ist;
B ist Cycloalkylen von 5 bis 8 C-Atomen oder Alkylen von 1 bis 6 C-Atomen, das durch Hydroxy, Methoxy, Ethoxy, Sulfato, Sulfo oder Carboxy substituiert sein kann, oder ist Phenylen, das durch Methoxy, Ethoxy, Methyl, Ethyl, Sulfo und/oder Carboxy substituiert sein kann;
X² ist eine Gruppe der Formel -S-, -O-, -NH- oder -N(R'')- mit R'' der obengenannten Bedeutung;
D^{O} ist Alkylen von 1 bis 6 C-Atomen, das durch Hydroxy, Methoxy, Ethoxy, Sulfo, Sulfato oder Carboxy substituiert sein kann, oder ist Phenylen, das durch Methoxy, Ethoxy, Methyl, Ethyl, Sulfo und/oder Carboxy substituiert sein kann, oder ist Phenylen-alkylen, Alkylen-phenylen, Alkylen-phenylen-alkylen oder Phenylen-alkylen-phenylen, wobei die Alkylengruppen dieser Reste solche von 1 bis 6 C-Atomen sind und durch Hydroxy, Methoxy, Ethoxy, Sulfo, Sulfato oder Carboxy substituiert sein können, und die Phenylenreste durch Methoxy, Ethoxy, Methyl, Ethyl, Sulfo und/oder Carboxy substituiert sein können, oder D^{O} kann eine direkte Bindung sein, falls (a + b) nicht Null ist;
R^{A} ist Wasserstoff, Alkoxy von 1 bis 8 C-Atomen, Halogen, Hydroxy, Alkoxy von 2 bis 4 C-Atomen, das durch Alkoxy von 1 bis 4 C-Atomen substituiert ist, N-Morpholino, N-Imidazolino oder eine Gruppe der Formel 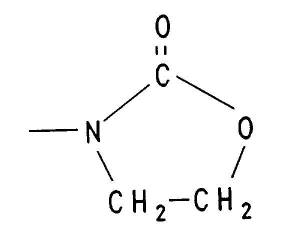 vorzugsweise Hydroxy;
R^{B} hat eine der für R^{A} genannten Bedeutungen oder ist Alkyl von 1 bis 4 C-Atomen;
R^{C} ist Wasserstoff, Alkoxy von 1 bis 8 C-Atomen, das durch Alkoxy von 1 bis 4 C-Atomen substituiert sein kann, Halogen, Hydroxy, Alkyl von 1 bis 8 C-Atomen, Alkenyl von 2 bis 8 C-Atomen, Alkinyl von 3 bis 8 C-Atomen oder Phenyl, vorzugsweise Hydroxy;
U ist eine Gruppe der allgemeinen Formel (5a) oder (5b)
-O-R^{H} (5a) 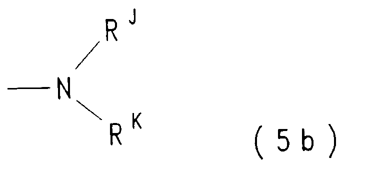
in welchen
R^{H} Alkyl von 1 bis 6 C-Atomen ist, das durch Phenyl, Sulfophenyl, Sulfo, Sulfato oder Carboxy substituiert sein kann, oder Phenyl ist, das durch 1 oder 2 Substituenten aus der Gruppe Methyl, Ethyl, Methoxy, Ethoxy, Sulfo, Carboxy und Chlor substituiert sein kann.
R^{J} Wasserstoff oder Alkyl von 1 bis 6 C-Atomen ist, das durch Alkanoyloxy von 2 bis 5 C-Atomen, Sulfo, Sulfato, Carboxy, Phosphato, Phenyl, Sulfophenyl oder Cyano substituiert sein kann, oder Cycloalkylen von 5 bis 8 C-Atomen ist und
R^{K} Wasserstoff oder Alkyl von 1 bis 6 C-Atomen, das durch Alkanoyloxy von 2 bis 5 C-Atomen, Sulfo, Sulfato, Carboxy, Phosphato, Phenyl, Sulfophenyl oder Cyano substituiert sein kann, oder Phenyl ist, das durch 1 oder 2 Substituenten aus der Gruppe Methyl, Ethyl, Methoxy, Ethoxy, Sulfo, Carboxy, Sulfamoyl, Carbamoyl und Chlor substituiert sein kann.

2. Verfahren zur Herstellung eines Farbstoffes der allgemeinen Formel (1) von Anspruch 1, dadurch gekennzeichnet, daß man eine Verbindung der allgemeinen Formel (6)
F-(Z^{o})ₛ (6)
in welcher
F und s eine der in Anspruch 1 genannten Bedeutungen besitzen und
Z^{o} ein Rest der allgemeinen Formel (7a), (7b) oder (7c)
-Q-SO₂-CH= CH₂ (7a)
-Q-SO₂-CH₂-CH₂-V (7b) 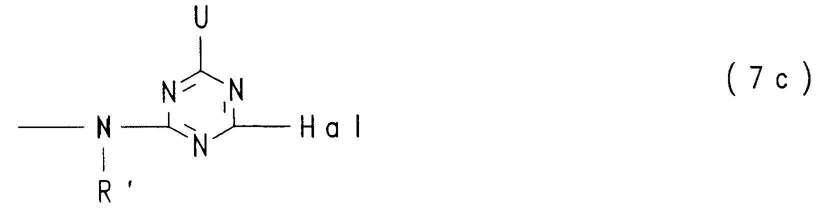
ist, in welchen
Q, U und R' eine der in Anspruch 1 angegebenen Bedeutungen haben,
V Chlor, Sulfato oder Thiosulfato ist und
Hal für ein Halogenatom steht,
mit einer Verbindung der allgemeinen Formel (8) 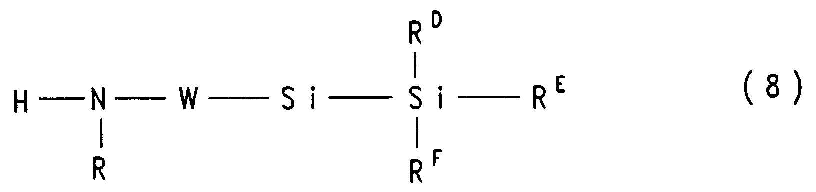 umsetzt, in welcher bedeuten:
R und W haben eine der in Anspruch 1 für Formel (1) bzw. (2A) angegebenen Bedeutungen;
R^{D} ist Alkoxy von 1 bis 8 C-Atomen, Wasserstoff, Halogen, Hydroxy, Alkoxy von 2 bis 4 C-Atomen, das durch Alkoxy von 1 bis 4 C-Atomen substituiert ist, N-Morpholino, N-Imidazolino oder eine Gruppe der Formel 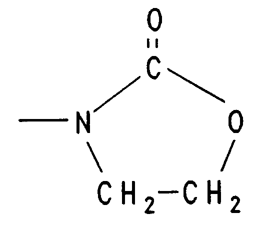
R^{E} hat eine der für R^{A} genannten Bedeutungen oder ist Alkyl von 1 bis 4 C-Atomen;
R^{F} ist Alkoxy von 1 bis 8 C-Atomen, das durch Alkoxy von 1 bis 4 C-Atomen substituiert sein kann, oder ist Wasserstoff, Hydroxy, Alkyl von 1 bis 8 C-Atomen, Alkenyl von 2 bis 8 C-Atomen, Alkinyl von 3 bis 8 C-Atomen oder Phenyl oder hat eine der für R^{D} genannten Bedeutungen.

3. Verwendung eines Farbstoffes von Anspruch 1 zum Färben (einschließlich Bedrucken) von Fasermaterialien, die Hydroxy-, Amino-, Carbonamid-, Carbonsäureester-, Carboxy- und/oder Thiolgruppen enthalten.

4. Verfahren zum Färben (einschließlich Bedrucken) von Fasermaterialien, die Hydroxy-, Amino-, Carbonamid-, Carbonsäureester-, Carboxy- und/oder Thiolgruppen enthalten, dadurch gekennzeichnet, daß man einen Farbstoff der allgemeinen Formel (1) von Anspruch 1 in wäßriger, wäßrig-organischer oder organischer Lösung auf das Fasermaterial aufbringt und ihn mittels Wärme oberhalb von 95°C auf dem Fasermaterial fixiert.
